# FASCICULE DE BREVET EUROPEEN

(11) **EP 3 753 255 B1**
(45) Date de publication et mention de la délivrance du brevet: **24.04.2024**
(21) Numéro de dépôt: 19710029.0
(22) Date de dépôt: 05.02.2019
(51) Int. Cl.: H04N 21/258, H04N 21/426, H04N 21/45, H04N 21/475, H04N 21/482

(54) **RÉCEPTION DE FLUX REPRÉSENTATIF D'UN CONTENU MULTIMÉDIA**
EMPFANG EINES STREAMS REPRÄSENTATIV FÜR MULTIMEDIA-INHALTE
RECEPTION OF A STREAM REPRESENTATIVE OF MULTIMEDIA CONTENT

(30) Priorité: 16.02.2018 FR 1851313
(43) Date de publication de la demande: 23.12.2020
(73) Titulaire: Orange, 92130 Issy-les-Moulineaux (FR)
(72) Inventeur: THOME, Dominique, 92326 CHÂTILLON CEDEX (FR); RIGAUDEAU, Serge, 92326 CHÂTILLON CEDEX (FR); DAVENET, Stéphane, 92326 CHÂTILLON CEDEX (FR); RACIN, Lionel, 92326 CHÂTILLON CEDEX (FR)
(86) Numéro de dépôt international: PCT/FR2019/050255
(87) Numéro de publication internationale: WO 2019/158837

(56) Documents cités:
- EP-A1- 3 211 908
- EP-A2- 2 469 850
- EP-A2- 2 645 731
- WO-A1-2017/089690
- US-A1- 2007 074 243
- US-A1- 2014 282 759
- US-B1- 8 640 166

## Description

### Domaine de l'invention

Le domaine de l'invention est celui de la réception de flux dans le domaine audiovisuel.

L'invention s'applique plus particulièrement à la réception d'un flux représentatif d'un contenu multimédia, que ce contenu multimédia soit diffusé en direct ou téléchargé à partir d'un catalogue de contenus.

L'invention peut notamment être mise en oeuvre dans un terminal doté d'une interface utilisateur et d'une interface graphique, par exemple une tablette, un téléphone portable, un smartphone (« téléphone intelligent »), un ordinateur personnel, une télévision connectée à un réseau de communication, etc...

### Présentation de l'art antérieur

Il existe différents types de contenus multimédia. On distingue par exemple les contenus multimédia diffusés en direct et les contenus multimédia que l'utilisateur peut télécharger à l'unité depuis un serveur de contenus.

Les contenus multimédia diffusés en direct sont par exemple des programmes de télévision qui sont transmis, via un réseau de transmission de données ou bien par voie aérienne, puis reçus par un terminal de réception d'un utilisateur donné, tel que par exemple un récepteur de télévision numérique équipé d'un décodeur du type Set-Top-Box.

Les contenus multimédia téléchargeables sont accessibles dans des catalogues de contenus multimédia, tels que des bibliothèques multimédia, par exemple des catalogues de vidéo à la demande (VOD, pour « Video on Demand » en anglais), des catalogues de podcasts audio et/ou vidéo, etc....

Le flux qui contient un contenu multimédia du type précité comprend différents marqueurs temporels, notamment un marqueur temporel de début du contenu et un marqueur temporel de fin du contenu. Dans certains cas, le contenu multimédia est interrompu au moins une fois par une coupure publicitaire. A cet effet, le flux contient un marqueur temporel de début de coupure publicitaire et un marqueur temporel de fin de coupure publicitaire. Au cours de la coupure publicitaire, différents spots publicitaires sont diffusés dans la durée comprise entre les marqueurs de début et de fin de coupure publicitaire.

Un inconvénient de ces coupures publicitaires réside dans le fait que les spots proposés à un utilisateur donné ne correspondent pas forcément à ses intérêts. De ce fait, lors de la coupure publicitaire, dans le cas par exemple où le contenu multimédia est un programme de télévision, l'utilisateur a tendance à changer de chaîne et à délaisser le programme de télévision qu'il regardait avant la coupure publicitaire, ce qui peut nuire à l'audience de la chaîne qui diffuse ce programme.

Il existe des solutions pour substituer la coupure publicitaire dédiée à l'ensemble des utilisateurs qui regardent un contenu multimédia donné par une coupure publicitaire ciblée par rapport à tout ou partie de ces utilisateurs. A cet effet, un module de substitution, installé soit dans le terminal de l'utilisateur, soit en amont, est adapté pour modifier le contenu multimédia lu par le module de lecture du terminal, en remplaçant la coupure publicitaire associée à ce contenu par une coupure de publicité ciblée. Le contenu multimédia ainsi modifié est alors visualisé par l'utilisateur.

Ces solutions sont toutefois complexes à mettre en oeuvre et nécessitent, en amont de la diffusion du flux contenant le contenu multimédia et la coupure publicitaire associée, un travail relativement complexe d'assemblage des spots publicitaires de la coupure publicitaire de substitution. Le fait qu'un tel travail d'assemblage soit fait en amont de la diffusion peut entraîner un désintérêt de l'utilisateur pour ces spots de substitution au moment où ce dernier les visualisent, parce qu'ils ne correspondent plus au profil de l'utilisateur, parce que ce dernier a changé de zone géographique ou encore parce que la situation familiale de l'utilisateur a évolué entre temps, etc...

En outre, ces solutions sont limitées au contexte publicitaire. Ainsi, par exemple, pour un contenu multimédia donné, tel que notamment un film, pour lequel il n'est pas prévu de l'interrompre par une coupure publicitaire, il n'est actuellement pas possible de modifier la visualisation de certaines portions du film pour permettre à l'utilisateur de visualiser à la place de ces portions ou en plus de ces portions, des contenus multimédia conformes à ses intérêts et/ou son profil.

Enfin, ces solutions sont limitées à un seul type de contenu multimédia, c'est à dire de type vidéo ou audio/vidéo. En particulier, ces solutions ne sont pas adaptées à la substitution de la restitution sonore d'un contenu audio par la substitution d'un autre contenu audio.

US 2014/282759 A1 - Ce document décrit des méthodes et des systèmes pour le tamponnage de contenu dans des dispositifs de communication, en utilisant plusieurs syntoniseurs pour stocker du contenu sur d'autres chaînes que celle actuellement visionnée par l'utilisateur, en facilitant le retour en arrière pour visionner le contenu raté.

WO 2017/089690 A1 - Ce document décrit un procédé de synchronisation d'un flux audio alternatif avec un flux audio principal lors de la diffusion d'un programme audiovisuel.

EP 2 645 731 A2 - Ce document concerne un dispositif d'affichage vidéo et une méthode de contrôle.

### Objet et résumé de l'invention

Un des buts de l'invention est de remédier à des inconvénients de l'état de la technique précité.

A cet effet, l'invention propose un procédé de réception d'un flux représentatif d'un contenu multimédia, tel que décrit de manière détaillée dans la revendication 1.

L'invention permet avantageusement de proposer à l'utilisateur, de modifier la restitution visuelle et/ou sonore de deux portions contigües d'un contenu multimédia par la restitution visuelle et/ou sonore de deux contenus multimédia respectifs de substitution ou bien adaptés aux intérêts de cet utilisateur. Le fait que ces deux contenus multimédia soient lus respectivement par deux modules de lecture différents permet de modifier de façon dynamique la restitution d'au moins deux portions successives du contenu multimédia transporté dans le flux. En outre, grâce à la présence des deuxième et troisième modules de lecture qui sont adaptés pour lire respectivement deux contenus multimédia différents et au fait que le troisième module de lecture est activé à un instant précédant l'instant de fin de la première portion prédéfinie du contenu multimédia, il est possible de proposer à l'utilisateur, la restitution de deux contenus multimédia successifs de substitution ou bien adaptés aux intérêts de l'utilisateur, sans aucun phénomène de latence à l'instant de restituer le deuxième contenu multimédia. Une telle restitution visuelle et/ou sonore est avantageusement commandée alternativement de façon à ce que les deux contenus multimédia de substitution ou bien adaptés aux intérêts de l'utilisateur soient restitués à l'utilisateur l'un après l'autre, sans coupure.

Selon un mode de réalisation particulier, la modification de la restitution d'une portion donnée du contenu multimédia consiste à substituer la restitution de la portion donnée par la restitution d'un des premier et deuxième contenus multimédia.

L'invention propose ainsi avantageusement un mode de réalisation dans lequel est mise en oeuvre la restitution d'un contenu multimédia à la place de la restitution d'une portion prédéfinie d'un contenu multimédia.

Par exemple, si la portion considérée du contenu multimédia comprend une composante audio et une composante vidéo, la restitution de la composante audio et de la composante vidéo de cette portion peut être remplacée :
- par la restitution de la composante audio et de la composante vidéo d'un contenu multimédia de substitution ou bien adapté aux intérêts de l'utilisateur, ou bien
- par la restitution uniquement de la composante vidéo d'un contenu multimédia de substitution ou bien adapté aux intérêts de l'utilisateur, ou bien encore
- par la restitution uniquement de la composante audio d'un contenu multimédia de substitution ou bien adapté aux intérêts de l'utilisateur.

Selon un autre exemple, si la portion considérée du contenu multimédia comprend une composante audio, dans le cas où le contenu multimédia est par exemple une émission de radio diffusée en direct ou bien téléchargée sous la forme d'un podcast, la restitution de la composante audio de cette portion est remplacée par la restitution d'une composante audio d'un contenu multimédia de substitution ou bien adapté aux intérêts de l'utilisateur.

Selon un autre mode de réalisation particulier, la modification de la restitution d'une portion donnée du contenu multimédia consiste à restituer au cours de la restitution de la portion donnée, l'un des premier et deuxième contenus multimédia.

L'invention propose ainsi avantageusement un mode de réalisation dans lequel la restitution d'un contenu multimédia de substitution ou bien adapté aux intérêts de l'utilisateur est mise en oeuvre au cours de la restitution d'une portion prédéfinie d'un contenu multimédia. Un tel mode de restitution est ainsi beaucoup plus souple que dans les solutions de l'art antérieur qui proposent systématiquement une substitution complète d'un contenu multimédia par un contenu multimédia de substitution.

Selon un exemple, lors de la restitution de la composante audio et de la composante vidéo d'une portion donnée d'un contenu multimédia, est restituée une composante graphique (ex : bandeau textuel ou vignette image ou vidéo) d'un contenu multimédia de substitution ou bien adapté aux intérêts de l'utilisateur.

Selon un autre exemple, lors de la restitution de la composante audio et de la composante vidéo d'une portion donnée d'un contenu multimédia, est restituée une composante audio d'un contenu multimédia de substitution ou bien adapté aux intérêts de l'utilisateur.

Selon un mode de réalisation particulier, l'activation du deuxième et du troisième module de lecture est mise en oeuvre suite à la lecture dans le flux, à un instant prédéterminé avant le début de la première portion du contenu multimédia, d'une information d'accès au premier contenu multimédia, et à un instant prédéterminé avant le début de la deuxième portion du contenu multimédia, d'une information d'accès au deuxième contenu multimédia.

Une telle information d'accès permet, durant la restitution d'un contenu multimédia courant, d'anticiper avantageusement une modification de la restitution d'une portion prédéfinie du contenu multimédia par la restitution d'un contenu multimédia de substitution ou bien adapté aux intérêts de l'utilisateur, de façon à ce que le contenu multimédia de substitution soit restitué de façon synchronisée sur la durée de la portion prédéfinie.

Selon un autre mode de réalisation particulier, l'activation du deuxième et du troisième module de lecture est mise en oeuvre suite à la lecture dans le flux, à un instant prédéterminé avant le début de la première portion du contenu multimédia, d'une information d'accès au premier contenu multimédia et d'une information d'accès au deuxième contenu multimédia.

Une telle information d'accès permet, durant la restitution d'un contenu multimédia courant, d'anticiper avantageusement une modification de la restitution de première et deuxième portions successives prédéfinies du contenu multimédia, par la restitution respective du premier et du deuxième contenu multimédia. Ainsi, les données des premier et deuxième contenus multimédia sont avantageusement rendues disponibles au niveau du dispositif de réception de flux, avant que ne soient restituées les première et deuxième portions du contenu multimédia courant.

Selon un autre mode de réalisation, l'information d'accès est déduite d'une information correspondant au contenu multimédia.

Selon un autre mode de réalisation particulier, l'information d'accès est un identifiant de contenu multimédia conforme aux intérêts de l'utilisateur.

Selon un autre mode de réalisation particulier, l'information d'accès contient une instruction pour déterminer si la restitution d'une portion donnée du contenu multimédia, qui n'a pas encore été lue, est modifiable ou non par la restitution d'un contenu multimédia conforme aux intérêts de l'utilisateur.

Selon un autre mode de réalisation particulier, l'information d'accès est une adresse d'accès, via un réseau de communication, au premier et/ou au deuxième contenu multimédia conforme aux intérêts de l'utilisateur.

Selon un autre mode de réalisation, l'information d'accès est une information de profil utilisateur.

Selon un autre mode de réalisation, le premier et/ou le deuxième contenu multimédia de substitution ou conforme aux intérêts de l'utilisateur est accessible :
- depuis le dispositif de réception, et/ou
- depuis un dispositif de stockage de contenus connecté au dispositif de réception via un réseau de communication, et/ou
- dans un sous-flux associé au flux reçu.

Le fait que les contenus multimédia de substitution ou bien conformes aux intérêts de l'utilisateur soient accessibles directement depuis le dispositif de réception évite un encombrement du réseau de communication qui serait provoqué par le lancement de nombreuses requêtes d'accès à un serveur de stockage de ces contenus multimédia et permet d'anticiper la mise à disposition de tels contenus avant la restitution des portions prédéfinies du contenu multimédia courant.

Le fait que les contenus multimédia de substitution ou bien conformes aux intérêts de l'utilisateur soient accessibles depuis un dispositif de stockage de contenus connecté au dispositif de réception, via un réseau de communication, permet néanmoins de proposer des contenus multimédia de substitution aux utilisateurs qui par exemple, soit allument leur récepteur de télévision ou leur poste de radio juste avant la restitution des portions prédéfinies du contenu multimédia courant, soit visualisaient un autre programme de télévision sur une autre chaîne ou écoutaient une émission de radio sur une autre chaîne radio et, en changeant de chaîne pour le programme de télévision considéré ou pour l'émission de radio considérée, arrivent au cours de la restitution des portions prédéfinies du contenu multimédia courant, en pouvant malgré tout bénéficier de la restitution de contenus multimédia de substitution ou bien conformes à leurs intérêts.

Le fait qu'un contenu multimédia de substitution ou bien conforme aux intérêts de l'utilisateur soit accessible dans un sous-flux associé au flux reçu permet un accès direct à ce contenu multimédia par le dispositif de réception, ce qui rend la modification de la restitution d'une portion considérée du contenu multimédia courant moins complexe à mettre en oeuvre et moins coûteuse en ressources mémoire du dispositif de réception.

Les différents modes ou caractéristiques de réalisation précités peuvent être ajoutés indépendamment ou en combinaison les uns avec les autres, au procédé de réception défini ci-dessus.

L'invention concerne également un dispositif de réception d'un flux représentatif d'un contenu multimédia, dont les caractéristiques et fonctionnalités sont plus amplement décrites dans la revendication 12.

L'invention concerne encore un programme d'ordinateur comportant des instructions pour mettre en oeuvre le procédé de réception selon l'invention, lorsqu'il est exécuté sur un terminal ou plus généralement sur un ordinateur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé de réception selon l'invention, tel que décrit ci-dessus.

Un tel support d'enregistrement peut être n'importe quelle entité ou dispositif capable de stocker le programme. Par exemple, le support peut comporter un moyen de stockage, tel qu'une ROM ou une RAM, par exemple un CD ROM, une ROM ou une RAM de circuit microélectronique, une clé USB, ou encore un moyen d'enregistrement magnétique, par exemple un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de réception précité.

Le dispositif de réception, le programme d'ordinateur et le support d'enregistrement correspondants précités présentent au moins les mêmes avantages que ceux conférés par le procédé de réception selon la présente invention.

### Liste des figures

D'autres avantages et caractéristiques de l'invention apparaîtront plus clairement à la lecture de la description suivante de plusieurs modes de réalisation particuliers de l'invention, donnés à titre de simples exemples illustratifs et non limitatifs, et des dessins annexés, parmi lesquels :
- les figures 1A et 1B présentent de façon schématique deux modes de réalisation d'une architecture dans laquelle est mis en oeuvre le procédé de réception de flux selon l'invention ;
- les figures 2A et 2B représentent deux exemples d'un premier type de structure de flux selon un premier mode de réalisation ;
- les figures 3A et 3B représentent deux exemples d'un deuxième type de structure de flux selon le premier mode de réalisation ;
- la figure 4 représente un dispositif de réception mettant en oeuvre le procédé de réception de flux selon le premier mode de réalisation de l'invention ;
- la figure 5 présente de façon schématique le déroulement d'un procédé de réception de flux selon le premier mode de réalisation de l'invention ;
- les figures 6A à 6D représentent des exemples de modification de la restitution d'une portion donnée d'un contenu multimédia ;
- les figures 7A à 7C représentent trois exemples d'un premier type de structure de flux selon un deuxième mode de réalisation ;
- les figures 8A à 8C représentent trois exemples d'un deuxième type de structure de flux selon un deuxième mode de réalisation ;
- les figures 9A et 9B représentent des variantes de réalisation des flux représentés sur les figures 7A et 7C ;
- la figure 10 représente un dispositif de réception mettant en oeuvre le procédé de réception de flux selon le deuxième mode de réalisation de l'invention ;
- la figure 11 présente de façon schématique le déroulement d'un procédé de réception de flux selon le deuxième mode de réalisation de l'invention.

### Description de modes de réalisation particuliers de l'invention

Premier mode de réalisation -substitution d'au moins deux portions successives d'un contenu multimédia

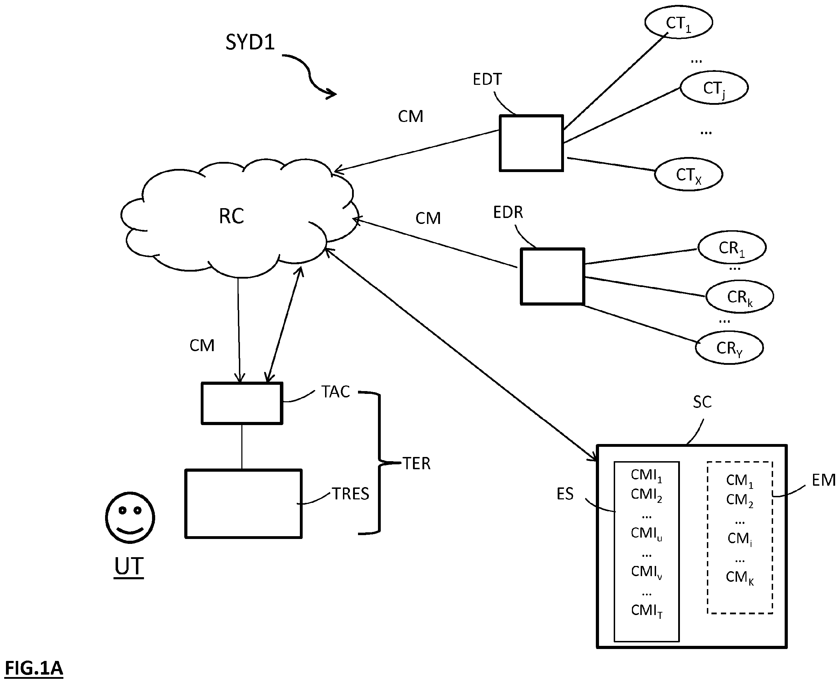

En relation avec la figure 1A, on présente un système de diffusion SYD1 de flux représentatif d'un contenu multimédia CM selon un premier mode de réalisation. Dans l'exemple de la figure 1A, le contenu multimédia CM est notamment :
- un programme de télévision proposé par une chaîne de télévision CTⱼ choisie parmi une pluralité de chaînes de télévision existantes CT₁, CT₂, ..., CTⱼ,..., CT_{X},
- une émission de radio proposée par une chaîne de radio CRₖ choisie parmi une pluralité de chaînes de radio existantes CR₁, CR₂, ..., CRₖ,..., CR_{Y}.

Le contenu multimédia CM de type télévisuel est diffusé en direct par un équipement de diffusion EDT, tandis que le contenu multimédia CM de type radio est diffusé en direct par un équipement de diffusion EDR.

De façon connue, la diffusion de tels flux se fait, à titre d'exemple, par voie aérienne (ex : hertzienne ou satellite) selon la technique dite de « broadcast » ou alors au moyen d'un réseau matériel (ex : câble ou fibre) de type Internet, selon la technique multicast ou unicast.

L'architecture précitée permet à l'utilisateur UT d'un terminal TER d'avoir accès aux programmes de télévision ou aux émissions de radio proposés, aussi bien en situation de mobilité qu'en situation de sédentarité, via un réseau de communication RC.

En situation de mobilité, le terminal TER est par exemple un téléphone portable, un smartphone (« téléphone intelligent »), une tablette, un ordinateur portable, etc...

En situation de sédentarité, le terminal TER pourrait être un ordinateur personnel de type PC.

Toujours en situation de sédentarité, et comme représenté sur la figure 1A, le terminal TER se compose par exemple :
- d'un terminal d'accès TAC qui est apte à recevoir et traiter les flux diffusés en provenance de l'équipement de diffusion EDT ou EDR,
- d'un terminal de restitution TRES apte à restituer à l'utilisateur UT les programmes traités par le terminal d'accès TAC.

Dans un exemple de réalisation, le terminal d'accès TAC et le terminal de restitution TRES sont regroupés en un seul terminal. Il pourrait par exemple s'agir d'un téléviseur contenant un décodeur de type set-top-box. Dans un autre exemple, le terminal d'accès TAC est un boîtier de connexion Internet et le terminal de restitution TRES est une tablette faisant office de terminal de restitution connecté au boîtier au moyen d'un réseau local, par exemple sans fil, en particulier du type WiFi ou CPL (abréviation de « courants porteurs en ligne »). Selon un autre exemple, le terminal d'accès TAC est un boîtier de connexion Internet et le terminal de restitution est un poste de radio connecté à ce boîtier au moyen d'un réseau local, par exemple sans fil, en particulier du type WiFi ou CPL.

Le terminal d'accès TAC est aussi muni de moyens de stockage de contenus multimédia, notamment les programmes de télévision ou les émissions de radio qui sont diffusés via le réseau RC. De façon alternative, il peut aussi être connecté à un module d'enregistrement de contenus multimédia externe.

L'utilisateur UT peut interagir avec le terminal d'accès TAC à l'aide d'une télécommande classique ou à l'aide d'un terminal qui comprend à cet effet une application logicielle adaptée de télécommande. Le terminal d'accès TAC, de même que le terminal TER, comprennent en outre des moyens de connexion au réseau de communication RC qui peuvent être, par exemple, de type x-DSL, fibre ou encore 3G, 4G, 5G.

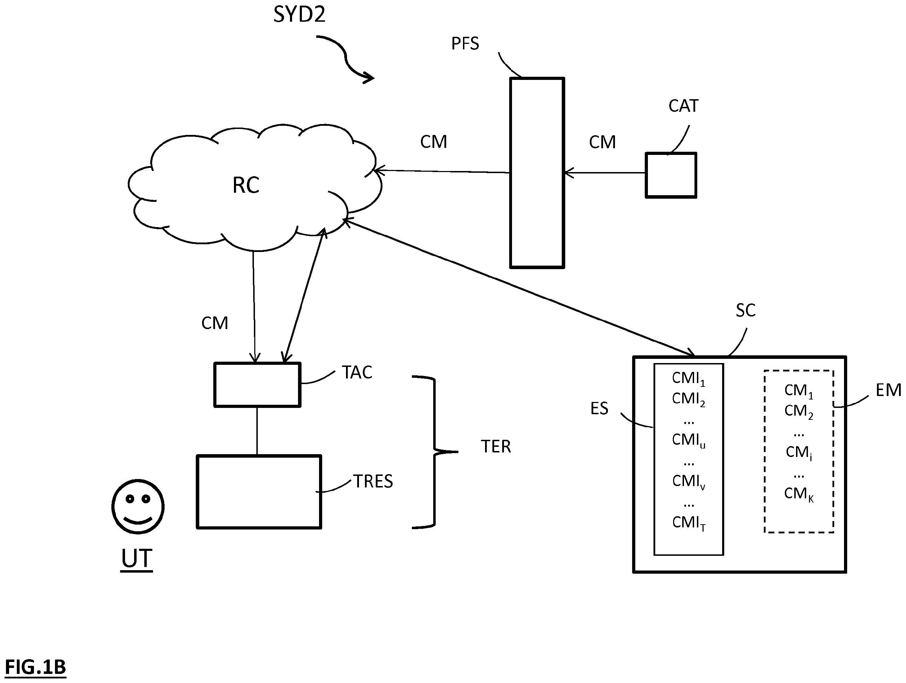

En relation avec la figure 1B, on présente un système de diffusion SYD2 de flux représentatif d'un contenu multimédia CM selon un deuxième mode de réalisation. Le système de diffusion SYD2 de la figure 1B présente des éléments communs avec le système de diffusion SYD1 de la figure 1A. Pour cette raison, ces éléments sont représentés par les mêmes références numériques et ne seront pas décrits à nouveau. Dans l'exemple de la figure 1B, le contenu multimédia CM est sélectionné par l'utilisateur UT dans un catalogue de contenus CAT, tel que par exemple un catalogue VoD, un catalogue de podcasts audiovisuels ou uniquement audio, un catalogue de vidéos et/ou d'images et/ou de photos, un catalogue de musique, un catalogue de livres numériques, etc...

Le contenu multimédia CM est ensuite transmis dans un flux par une plateforme de service PFS, ledit flux étant reçu par le terminal d'accès TAC.

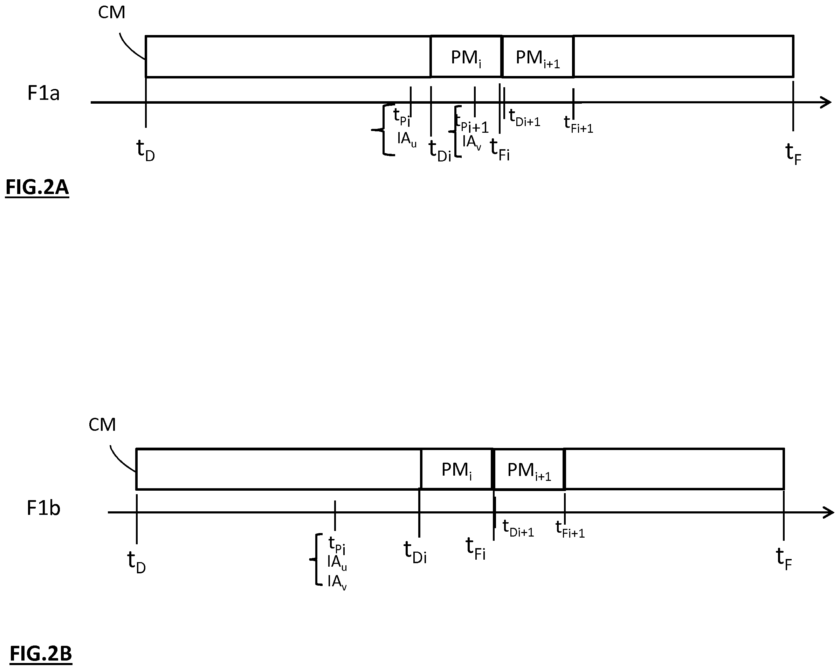

En référence à la figure 2A, est représenté un premier mode de réalisation d'un flux F1a représentatif d'un contenu multimédia CM.

Le flux F1a contient un marqueur temporel t_{D} de début du contenu CM et un marqueur temporel t_{F} de fin du contenu CM.

Le flux F1a contient également au moins deux portions prédéfinies PMᵢ et PMᵢ₊₁ qui se suivent dans le contenu CM. Chaque portion est associée à un segment temporel du flux F1a et comprend à cet effet un temps de début et un temps de fin de portion. Les portions PMᵢ et PMᵢ₊₁ peuvent être des segments de durée égale ou non.

Plus particulièrement, le flux F1a est édité préalablement de façon à contenir :
- un marqueur temporel de début t_{Di}, respectivement de fin t_{Fi} de la portion de contenu PMᵢ,
- un marqueur temporel de début t_{Di+1}, respectivement de fin t_{Fi+1}, de la portion de contenu PMᵢ₊₁.

Dans l'exemple de la figure 2A, la signalisation des marqueurs temporels est réalisée directement dans le flux F1a, c'est-à-dire in-band.

Selon un mode de réalisation, les marqueurs temporels précités sont des balises telles que par exemple du type SCTE 104/35.

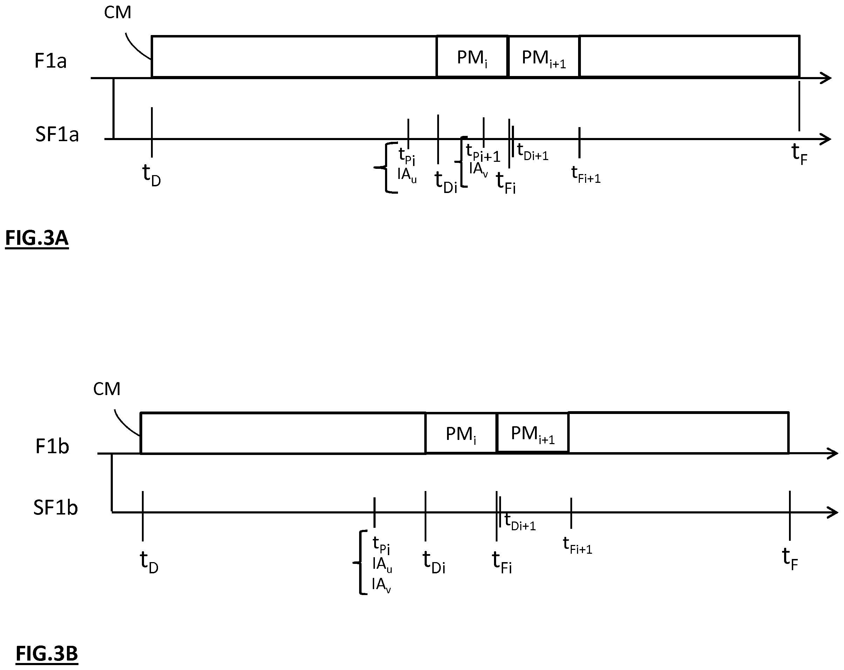

Selon un autre mode de réalisation représenté en lien avec la figure 3A, les marqueurs temporels précités sont indiqués dans un sous-flux de signalisation SF1a associé au flux F1a.

La signalisation des marqueurs temporels est transmise dans le réseau de communication RC (figure 1A ou 1B) et non directement dans le flux qui contient le contenu multimédia CM. Il s'agit ici d'une signalisation out-band.

Le sous-flux SF1a contient des informations permettant l'analyse du flux F1a par le terminal d'accès TAC de l'utilisateur représenté sur les figures 1A et 1B.

Selon l'invention, et comme cela sera décrit plus en détail dans la description ci-dessous, il est proposé de modifier, à la volée dans le flux F1a, la restitution d'au moins deux portions successives PMᵢ, PMᵢ₊₁ du contenu multimédia CM, par respectivement la restitution d'au moins deux contenus multimédia CMIᵤ, CMIᵥ de substitution, qui sont adaptés ou non aux intérêts de l'utilisateur UT du terminal TER des figures 1A et 1B. Dans la suite de la description, les contenus de substitution pouvant être adaptés aux intérêts de l'utilisateur UT seront appelés contenus d'intérêt. Les contenus d'intérêt CMIᵤ, CMIᵥ font partie d'un ensemble ES de contenus multimédia CMI₁, CMI₂,..., CMIᵤ,..., CMIᵥ,..., CMI_{T} prédéterminés, avec 1≤u≤v≤T. L'ensemble ES est stocké dans un serveur de contenus SC.

Selon l'invention, en référence à la figure 2A, le flux F1a est édité de façon à contenir :
- à un instant prédéterminé t_{Pi} avant le début de la portion PMᵢ, une information IAᵤ d'accès au contenu multimédia d'intérêt CMIᵤ,
- à un instant prédéterminé t_{Pi+1} avant le début de la portion PMᵢ₊₁, une information IAᵥ d'accès au contenu multimédia d'intérêt CMIᵥ.

Selon un autre exemple représenté en référence à la figure 2B, le flux F1b contient, à un instant prédéterminé t_{Pi} avant le début de la portion PMᵢ, une information IAᵤ d'accès au contenu multimédia d'intérêt CMIᵤ et une information IAᵥ d'accès au contenu multimédia d'intérêt CMIᵥ.

En référence à la figure 3B, selon une variante du mode de réalisation de la figure 3A, est représenté un flux F1b associé à un sous-flux de signalisation SF1b, le sous flux SF1b contenant, à un instant prédéterminé t_{Pi} avant le début de la portion PMᵢ, une information IAᵤ d'accès au contenu multimédia d'intérêt CMIᵤ et une information IAᵥ d'accès au contenu multimédia d'intérêt CMIᵥ.

Dans le cas où les instants prédéterminés t_{Pi} et t_{Pi+1} sont marqués temporellement par deux balises SCTE 104/35 :
- en référence à la figure 2A, la balise SCTE 104/35 à l'instant prédéterminé t_{Pi} comprend un champ de données contenant l'information d'accès IAᵤ et la balise SCTE 104/35 à l'instant prédéterminé t_{Pi+1} comprend un champ de données contenant l'information d'accès IAᵥ ;
- en référence à la figure 2B, la balise SCTE 104/35 à l'instant prédéterminé t_{Pi} comprend un champ de données contenant l'information d'accès IAᵤ et l'information d'accès IAᵥ.

Dans le cas où les instants prédéterminés t_{Pi} et t_{Pi+1} sont renseignés dans les sous-flux de signalisation SF1a et SF1b des figures 3A et 3B :
- en référence à la figure 3A, le sous-flux de signalisation SF1a contient un champ de données associant l'instant prédéterminé t_{Pi} à l'information d'accès IAᵤ et un champ de données associant l'instant prédéterminé t_{Pi+1} à l'information d'accès IAᵥ,
- en référence à la figure 3B, le sous-flux de signalisation SF1b contient un champ de données associant l'instant prédéterminé t_{Pi} à l'information d'accès IAᵤ et à l'information d'accès IAᵥ.

Selon des variantes de réalisation des figures 2A, 2B, 3A et 3B, dans le cas où les flux F1a, F1b, F2a, F2b sont diffusés par une chaîne de télévision donnée, par exemple la chaîne de télévision CTⱼ de la figure 1A, ou bien par une chaîne de radio donnée, par exemple la chaîne de radio CRₖ de la figure 1A, les flux F1a et F1b des figures 2A et 2B, et les sous-flux SF1a et SF1b des figures 3A et 3B contiennent chacun des marqueurs temporels associés à des informations d'accès à des contenus d'intérêt destinés à la modification de la restitution de portions présentes dans des contenus diffusés sur une autre chaîne que la chaîne CTⱼ ou CRₖ.

Conformément à l'invention, l'information d'accès IAᵤ (respectivement IAᵥ) est, à titre d'exemples non exhaustifs :
- une instruction adressée au terminal d'accès TAC (figs.1A et 1B) pour que ce dernier détermine, pour une portion à lire du contenu multimédia courant CM considéré, par exemple la portion PMᵢ, si la restitution de la portion PMᵢ est à modifier ou non par la restitution d'un contenu d'intérêt sélectionné dans l'ensemble ES de contenus d'intérêt des figures 1A et 1B,
- une information déduite d'une information correspondant à la portion PMᵢ, telle que par exemple une metadonnée, un mot destiné à être prononcé ou affiché durant la restitution de la portion PMᵢ, etc...,
- un identifiant de contenu multimédia d'intérêt, tel que par exemple le nom du fichier contenant ce contenu multimédia d'intérêt,
- une adresse d'accès, par exemple une URL (de l'anglais « Uniform Resource Locator »), via un réseau de communication, par exemple le réseau RC des figures 1A et 1B, à un contenu d'intérêt de l'ensemble ES de contenus d'intérêt CMI₁, CMI₂,..., CMIᵤ,..., CMIᵥ,..., CMI_{T},
- au moins une information de profil utilisateur, telle que par exemple un ou plusieurs numéros de départements, un âge ou une fourchette d'âges, la valeur d'un revenu ou une fourchette de revenus, une durée de visualisation de la télévision en heures/jour, etc....

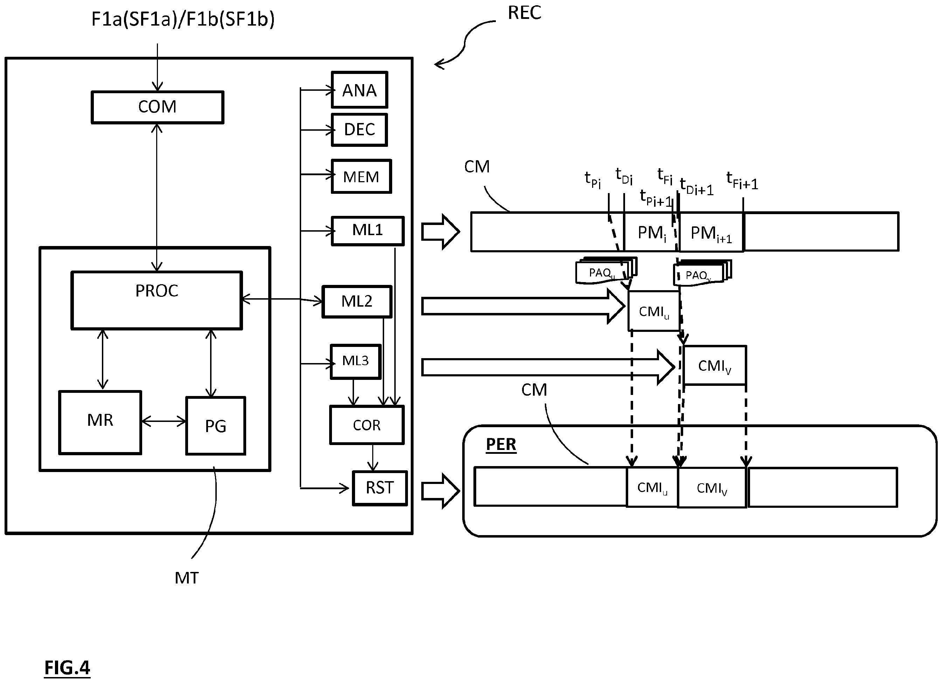

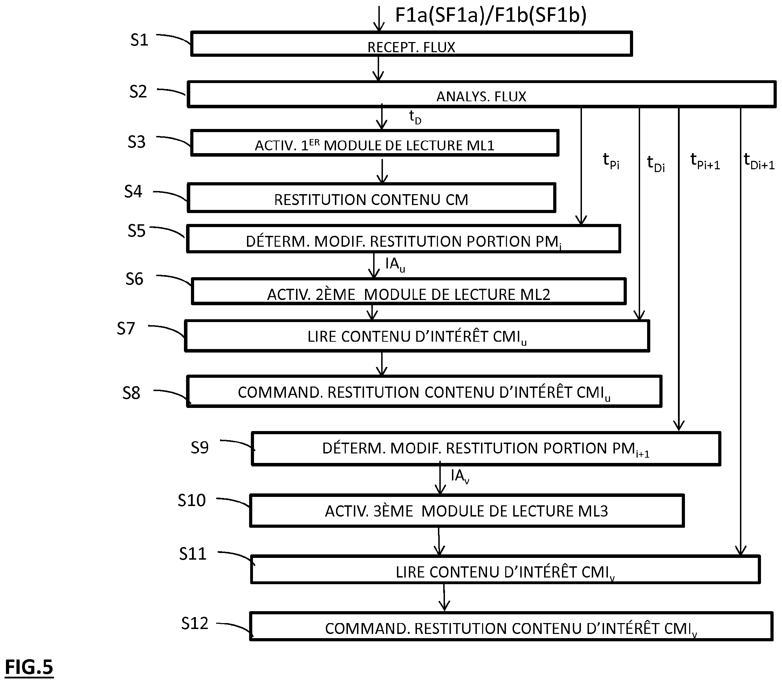

En relation avec la figure 4, on considère maintenant, selon un premier mode de réalisation, la structure simplifiée d'un dispositif REC de réception de flux représentatif d'un contenu multimédia CM. Un tel dispositif est contenu dans le terminal d'accès TAC des figures 1A et 1B, selon un exemple de réalisation de l'invention. Un tel dispositif de réception de flux est adapté pour mettre en oeuvre le procédé de réception de flux selon l'invention qui va être décrit ci-dessous en référence à la figure 5.

De façon connue en soi, le dispositif de réception REC comprend :
- un module de communication COM qui est adapté pour communiquer, via le réseau de communication RC, selon par exemple le protocole http (abréviation anglaise de « HyperText Transfer Protocol »), avec les équipements de diffusion EDT et EDR de la figure 1A ou bien avec la plateforme de service PFS de la figure 1B,
- un module ANA d'analyse des flux reçus,
- un premier module de lecture ML1 pour lire le contenu multimédia CM contenu dans le flux,
- un module DEC de décodage audio, vidéo ou encore audio/vidéo des données du contenu multimédia CM, lesdites données pouvant être de type texte et/ou audio et/ou image et/ou vidéo et/ou audiovisuel,
- une mémoire MEM de stockage de données, telle que par exemple une mémoire tampon.

Le dispositif de réception REC comprend des ressources physiques et/ou logicielles, en particulier un module de traitement MT pour mettre en oeuvre le procédé de réception de flux de la figure 5.

Le module de traitement MT contient un processeur PROC piloté par un programme d'ordinateur PG.

A l'initialisation, les instructions de code du programme d'ordinateur PG sont par exemple chargées dans une mémoire RAM, notée MR, avant d'être exécutées par le module de traitement MT.

Selon l'invention, pour au moins des première et deuxième portions successives CMᵢ, CMᵢ₊₁ prédéfinies du contenu multimédia CM, le dispositif de réception REC comprend :
- un deuxième module de lecture ML2 pour lire un premier contenu multimédia d'intérêt CMIᵤ parallèlement à la lecture du contenu multimédia CM par le premier module de lecture ML1, le module de lecture ML2 étant piloté par le processeur PROC du module de traitement MT,
- un troisième module de lecture ML3 pour lire un deuxième contenu multimédia d'intérêt CMIᵥ parallèlement à la lecture du contenu multimédia CM par le premier module de lecture ML1, le module de lecture ML3 étant piloté par le processeur PROC du module de traitement MT,
- le module de restitution RST restitue le contenu audiovisuel CA et le contenu multimédia CM lus sur le dispositif périphérique PER,
- un module de contrôle de restitution COR commande la restitution, par le module de restitution RST,
   - soit du contenu multimédia CM ou des portions de celui-ci, lu(es) par le module de lecture ML1, en prenant en compte les informations de balisage indiquées dans le flux reçu et la et/ou les information(s) d'accès associée(s) à ces informations de balisage,
   - soit de chaque contenu d'intérêt lu par le module de lecture ML2 (respectivement ML3), à la place ou en plus de la restitution d'une portion donnée PMᵢ (respectivement PMᵢ₊₁) du contenu multimédia CM courant, en prenant en compte les informations de balisage indiquées dans le flux reçu et la et/ou les information(s) d'accès associée(s) à ces informations de balisage.

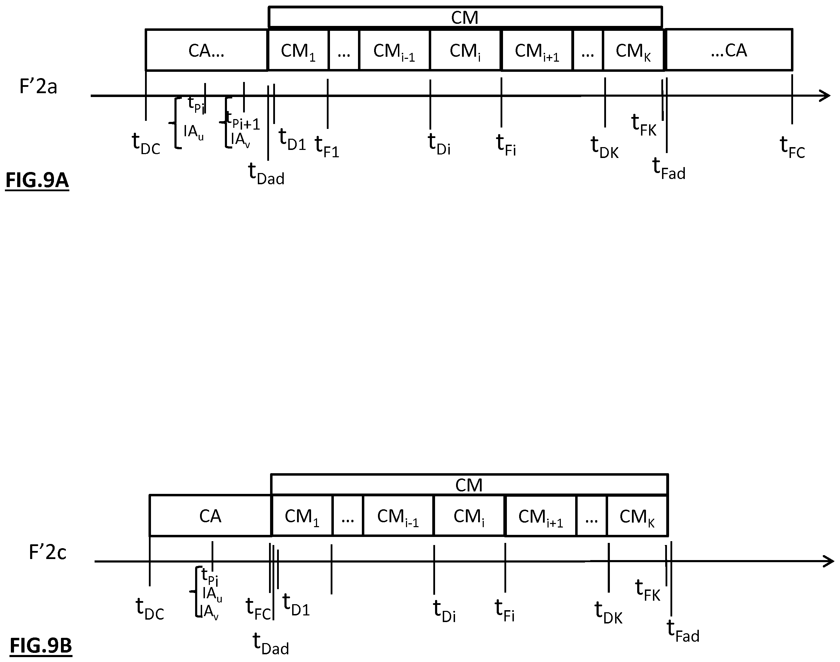

Un premier mode de réalisation du procédé de réception de flux selon l'invention est maintenant décrit en relation avec la figure 5. Un tel procédé se déroule comme suit :
En S1, le module de communication COM de la figure 9 reçoit un flux du type de ceux représentés sur les figures 2A à 2B et 3A à 3B. Comme déjà expliqué plus haut dans la description, un tel flux est représentatif d'un contenu multimédia CM.

En S2, le module d'analyse ANA de la figure 4 lit à la suite les différents marqueurs temporels insérés dans le flux.

En S3, suite à la lecture du marqueur temporel t_{D} indiquant le début du contenu multimédia CM, le module de traitement MT active le premier module de lecture ML1 pour lire les données du contenu multimédia CM.

En S4, le module de restitution RST restitue le contenu multimédia CM sur le dispositif périphérique PER de la figure 4, au fur et à mesure que le contenu multimédia CM est lu en S3.

En S5, à un instant prédéterminé t_{Pi} avant l'instant t_{Di} de début d'une portion prédéfinie PMᵢ du contenu CM, le module d'analyse ANA détermine que la restitution de la portion PMᵢ est à modifier par la restitution d'un contenu multimédia d'intérêt CMIᵤ sur la durée t_{Fi}-t_{Di} de la portion PMᵢ ou bien sur une partie de cette durée.

A cet effet, le module d'analyse ANA lit dans le flux F1a (respectivement F1b, SF1a, SF1b) une information IAᵤ d'accès audit contenu multimédia d'intérêt CMIᵤ.

En S6, le module de traitement MT procède à l'activation du deuxième module de lecture ML2 pour que ce dernier charge les premiers paquets de données PAQ_{U} relatives au contenu multimédia d'intérêt CMIᵤ, avant l'instant de début t_{Di} de la portion PMᵢ.

En S7, à l'instant de début t_{Di} de la portion PMᵢ, le deuxième module de lecture ML2 lit le contenu d'intérêt CMIᵤ.

En S8, à l'instant de début t_{Di} de la portion PMᵢ, le module de contrôle de restitution COR de la figure 4 commande alors la restitution du contenu multimédia CMIᵤ à la place ou en plus de la restitution de la portion PMᵢ du contenu multimédia CM qui est en train d'être lue par le premier module de lecture ML1. Comme représenté sur la figure 4, la restitution du contenu multimédia d'intérêt CMIᵤ est mise en oeuvre exactement entre l'instant t_{Di} de début et l'instant t_{Fi} de fin de la portion PMᵢ, de telle sorte que l'utilisateur UT ne perçoit pas la modification de la restitution du contenu multimédia CM qui est mise en oeuvre, de façon avantageuse, sans coupure dans le flux.

Aucun phénomène de latence n'est par ailleurs provoqué à l'instant t_{Di} où le deuxième module de lecture ML2 commence à lire le contenu d'intérêt CMIᵤ, puisque le module de lecture ML2 disposait déjà des premiers paquets de données PAQ_{U} du contenu d'intérêt CMIᵤ, tels que obtenus en S6.

En S9, à un instant prédéterminé t_{Pi+1} avant l'instant t_{Di+1} de la portion PMᵢ₊₁ qui suit directement la portion PMᵢ dans le contenu multimédia CM, et alors que le deuxième module de lecture ML2 est encore en train de lire le contenu multimédia d'intérêt CMIᵤ et que le module COR en commande la restitution de façon synchrone, le module d'analyse ANA détermine que la restitution de la portion PMᵢ₊₁ est à modifier par la restitution d'un contenu multimédia d'intérêt CMIᵥ sur la durée t_{Fi+1}-t_{Di+1} de la portion PMᵢ₊₁ ou bien sur une partie de cette durée.

A cet effet, le module d'analyse ANA lit dans le flux F1a (respectivement F1b, SF1a, SF1b) une information IAᵥ d'accès audit contenu multimédia d'intérêt CMIᵥ.

En S10, le module de traitement MT procède à l'activation du troisième module de lecture ML3 pour que ce dernier charge les premiers paquets de données PAQᵥ relatives au contenu multimédia d'intérêt CMIᵥ, avant l'instant de début t_{Di+1} de la portion PMᵢ₊₁.

En S11, à l'instant de début t_{Di+1} de la portion PMᵢ₊₁, le module de traitement MT désactive le deuxième module de lecture ML2, le troisième module de lecture ML3 lisant alors le contenu multimédia d'intérêt CMIᵥ.

En S12, à l'instant de début t_{Di+1} de la portion PMᵢ₊₁, le module de contrôle de restitution COR de la figure 4 commande alors la restitution du contenu multimédia d'intérêt CMIᵥ à la place ou en plus de la restitution de la portion PMᵢ₊₁ du contenu multimédia CM qui est en train d'être lue par le premier module de lecture ML1. Comme représenté sur la figure 4, la restitution du contenu multimédia d'intérêt CMIᵥ est mise en oeuvre exactement entre l'instant t_{Di+1} de début et l'instant t_{Fi+1} de fin de la portion PMᵢ₊₁, de telle sorte que l'utilisateur UT ne perçoit pas la modification de la restitution du contenu multimédia CM qui est mise en oeuvre sans coupure dans le flux.

Aucun phénomène de latence n'est provoqué entre l'instant t_{Fi} où le deuxième module de lecture ML2 termine de lire le contenu d'intérêt CMIᵤ et l'instant t_{Di+1} où le troisième module de lecture ML3 commence à lire le contenu d'intérêt CMIᵥ, puisque le module de lecture ML3 disposait déjà des premiers paquets de données PAQᵥ du contenu d'intérêt CMIᵥ, tels que obtenus en S10.

En alternative au procédé qui vient d'être décrit ci-dessus, les opérations S6 et S10 sont réalisées ensemble, à l'instant prédéterminé t_{Pi} avant l'instant t_{Di} de début de la portion PMᵢ considérée dans le contenu CM, ce qui permet d'anticiper encore davantage le préchargement des données du contenu d'intérêt CMIᵥ.

Grâce au procédé de réception de flux qui vient d'être décrit, il est ainsi possible de remplacer à la volée la restitution d'au moins deux portions qui se succèdent dans le contenu multimédia, par respectivement la restitution de deux contenus multimédia de substitution pouvant être conformes aux intérêts de l'utilisateur UT.

Bien entendu, la modification de la restitution de plus de deux portions successives présentes dans le contenu multimédia CM peut être envisagée. Ainsi par exemple, les modules de lecture ML2 et ML3 seront à nouveau respectivement activés si le module de traitement MT détermine que par exemple la restitution des portions successives PMᵢ₊₂, PMᵢ₊₃, puis PMᵢ₊₅, PMᵢ₊₆ sont à modifier.

Les intérêts de l'utilisateur UT comprennent au moins un critère CRT permettant de caractériser l'utilisateur selon différents aspects tels que par exemple géographiques, sociaux, démographiques, matrimoniaux, etc... Chaque critère CRT est par ailleurs connu à l'avance par les équipements de diffusion EDT et EDR de la figure 1A et par la plateforme de service PFS de la figure 1B. De tels critères CRT comprennent par exemple :
- le numéro de département de la ville dans laquelle habite l'utilisateur UT, et/ou
- le nom de la rue dans laquelle habite l'utilisateur UT, et/ou
- l'âge de l'utilisateur UT, et/ou
- la nationalité de l'utilisateur UT, et/ou
- le revenu annuel de l'utilisateur UT, et/ou
- le statut de l'utilisateur UT, par exemple marié, célibataire, sans enfant, famille nombreuse, étudiant, cadre, employé, et/ou,
- le type d'abonnement auquel a souscrit l'utilisateur UT, et/ou,
- une ou plusieurs plages horaires au cours desquelles l'utilisateur UT regarde la télévision,
- etc...,

Selon un mode de réalisation préféré, les contenus d'intérêt CMIᵤ et CMIᵥ accédés via respectivement les informations d'accès IAᵤ et IAᵥ sont téléchargés dans la mémoire MEM du dispositif de réception REC, préalablement à l'instant t_{Di} de début de la portion PMᵢ et à l'instant t_{Di+1} de début de la portion PMᵢ₊₁, sous la forme de fichiers respectifs, par exemple :
- de type mp4 et ayant par exemple pour nom « spotu.mp4 » et « spotv.mp4 »,
- de type mp3 et ayant par exemple pour nom « spotu.mp3 » et « spotv.mp3 »,
- de type jpeg et ayant par exemple pour nom « spotu.jpg » et « spotv.jpg ».

Chaque contenu d'intérêt CMIᵤ et CMIᵥ est téléchargé à partir du serveur de contenus SC des figures 1A et 1B, suite à la réception d'une requête en provenance du dispositif de réception REC, ladite requête contenant :
- une et/ou plusieurs informations de critère CRT de l'utilisateur UT, telles que mentionnées ci-dessus,
- un identifiant du dispositif de réception REC,
- un identifiant I_{PM} associé à la portion PMᵢ (respectivement PMᵢ₊₁).

Selon ce mode de réalisation préféré, les informations d'accès IAᵤ, IAᵥ lues par le module d'analyse ANA sont par exemple des identifiants des contenus d'intérêt CMIᵤ, CMIᵥ, tels que par exemple les noms des fichiers « spotu.mp4 », « spotv.mp4 », « spotu.mp3 », « spotv.mp3 », « spotu.jpg » et « spotv.jpg » mentionnés ci-dessus.

Selon un autre mode de réalisation, en référence aux figures 1A, 1B et 4, dans le cas par exemple où l'utilisateur UT allume son terminal TER un peu avant la lecture de la portion PMᵢ (respectivement PMᵢ₊₁), les informations d'accès IAᵤ, IAᵥ lues par le module d'analyse ANA sont des liens URL permettant au dispositif de réception REC d'accéder respectivement aux contenus d'intérêt CMIᵤ, CMIᵥ stockés dans le serveur de contenus SC des figures 1A et 1B, afin qu'ils soient directement lus par respectivement les modules de lecture ML2 et ML3. Chaque URL est contenue dans une requête en provenance du dispositif de réception REC, ladite requête contenant :
- une et/ou plusieurs informations de critère CRT de l'utilisateur UT, telles que mentionnées ci-dessus,
- un identifiant du dispositif de réception REC,
- un identifiant I_{PM} associé à la portion PMᵢ (respectivement PMᵢ₊₁).

En variante de cet autre mode de réalisation et en référence aux figures 3A à 3B, les informations d'accès IAᵤ, IAᵥ lues par le module d'analyse ANA sont des pointeurs de flux permettant au dispositif de réception REC d'accéder aux contenus d'intérêt CMIᵤ, CMIᵥ directement à partir des sous-flux SF1a et SF1b.

Selon un autre mode de réalisation, et en référence aux figures 1A, 1B et 4, chaque information d'accès IAᵤ, IAᵥ contient au moins une information de profil utilisateur, telle que par exemple un ou plusieurs numéros de départements, un âge ou une fourchette d'âges, la valeur d'un revenu annuel ou une fourchette de revenus annuels, une durée de visualisation de la télévision en heures/jour, etc....Suite à la lecture de chaque information d'accès IAᵤ, IAᵥ, par le module d'analyse ANA, le module de traitement MT du dispositif de réception REC vérifie si ladite au moins une information de profil correspond à au moins un critère CRT de l'utilisateur UT. Si tel est le cas, il est procédé à la modification de la restitution des portions PMᵢ, PMᵢ₊₁ par respectivement la restitution des contenus multimédia d'intérêt CMIᵤ, CMIᵥ. Si tel n'est pas le cas, les modules de lecture ML2 et ML3 ne sont pas activés et le premier module de lecture ML1 lit classiquement les portions PMᵢ, PMᵢ₊₁ dont la restitution successive sur le dispositif PER de la figure 4 est mise en oeuvre par le module de restitution RST.

Selon encore un autre mode de réalisation, chaque information d'accès IAᵤ, IAᵥ est une instruction transmise au module de traitement MT de la figure 4, qui détermine, pour une portion PMᵢ donnée, s'il convient ou non de procéder à la modification de la restitution de cette portion par un contenu d'intérêt spécifique, en fonction de différents critères qui peuvent être liés à l'abonnement de l'utilisateur UT, aux capacités du dispositif de réception REC, à la bande passante évaluée à l'instant prédéterminé t_{Pi}, avant le début de la portion PMᵢ.

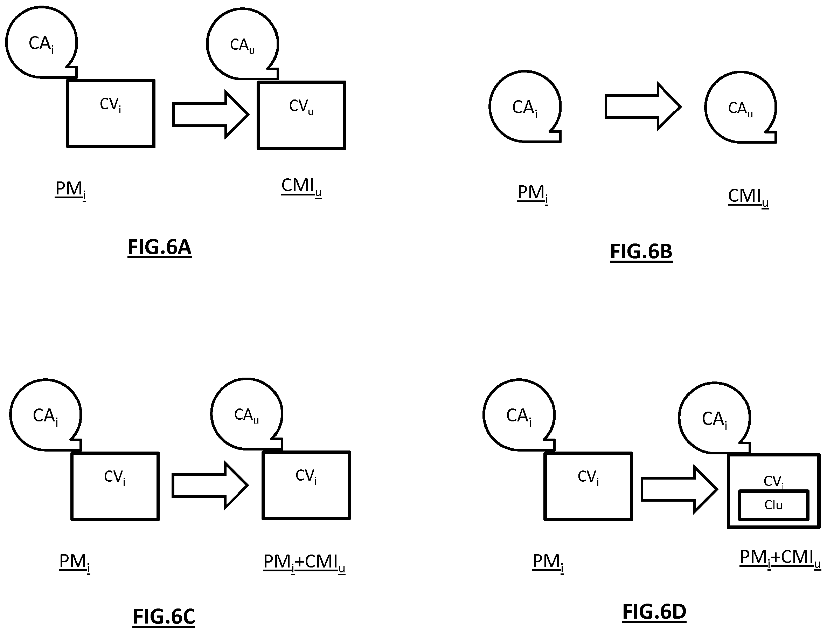

On va maintenant décrire, en référence aux figures 6A à 6D, différentes configurations possibles de modification de la restitution d'une portion donnée du contenu multimédia CM. La portion donnée est par exemple la portion PMᵢ.

Dans l'exemple de la figure 6A, la portion PMᵢ est de type audiovisuel et comprend à cet effet une composante audio CAᵢ et une composante vidéo CVᵢ. La modification de la restitution de la portion PMᵢ consiste alors à substituer la restitution de la portion PMᵢ par la restitution d'un contenu d'intérêt CMIᵤ également de type audiovisuel, comprenant à cet effet une composante audio CAᵤ et une composante vidéo CVᵤ.

Dans l'exemple de la figure 6B, la portion PMᵢ est de type audio et comprend à cet effet une composante audio CAᵢ. La modification de la restitution de la portion PMᵢ consiste alors à substituer la restitution de la portion PMᵢ par la restitution d'un contenu d'intérêt CMIᵤ également de type audio, comprenant à cet effet une composante audio CAᵤ.

Dans l'exemple de la figure 6C, la portion PMᵢ est de type audiovisuel et comprend à cet effet une composante audio CAᵢ et une composante vidéo CVᵢ. La modification de la restitution de la portion PMᵢ consiste alors à substituer uniquement la restitution de la composante audio CAᵢ de la portion PMᵢ par la restitution d'un contenu d'intérêt CMIᵤ uniquement de type audio, comprenant à cet effet une composante audio CAᵤ. Dans le cas par exemple où la portion PMᵢ du contenu multimédia est la partie cruciale d'un film restituée dans une langue qui n'est pas celle de l'utilisateur UT, la composante audio CAᵤ du contenu d'intérêt CMIᵤ qui est restituée est dans la langue natale de l'utilisateur UT.

Dans l'exemple de la figure 6D, la portion PMᵢ est de type audiovisuel et comprend à cet effet une composante audio CAᵢ et une composante vidéo CVᵢ. La modification de la restitution de la portion PMᵢ consiste alors à ajouter la restitution d'un contenu d'intérêt CMIᵤ lors de la restitution de la portion PMᵢ. Le contenu d'intérêt CMIᵤ est par exemple de type image, comprenant à cet effet une composante image CIᵤ qui apparaît en surimpression durant la restitution de la portion CMᵢ ou durant une partie seulement de cette restitution, à un emplacement prédéterminé de l'écran constituant le dispositif périphérique PER de la figure 4. Selon un exemple, dans le cas où l'utilisateur s'appelle Monsieur Dupont, le contenu d'intérêt CMIᵤ pourrait être dans cet exemple un bandeau contenant un texte publicitaire adressé spécifiquement à l'utilisateur UT, Monsieur Dupont, intitulé par exemple : « Monsieur Dupont, un nouveau supermarché vient de s'installer à 50m de votre rue ! ».

### Deuxième mode de réalisation - substitution d'une pluralité de contenus multimédia se succédant dans un contenu multimédia CM (ex : coupure publicitaire)

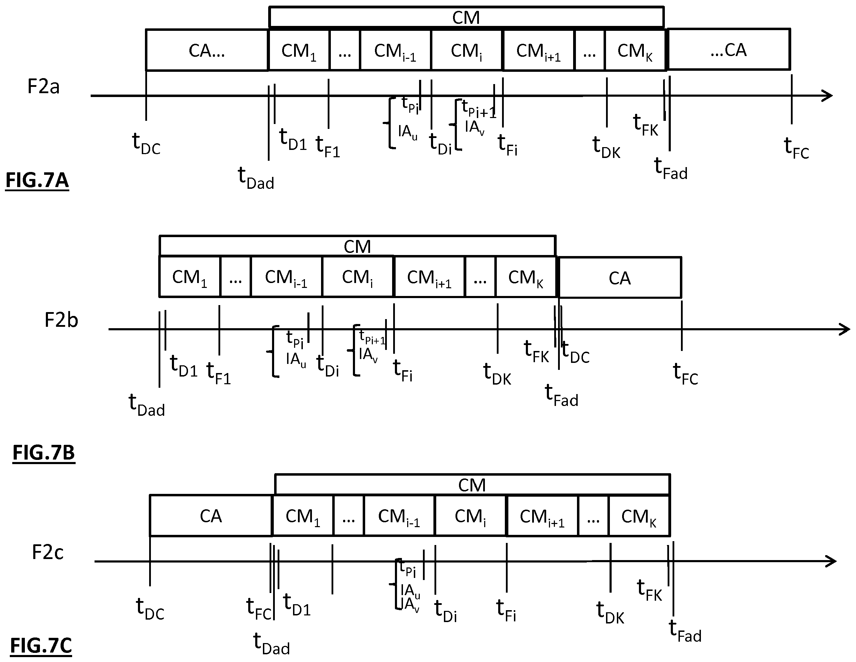

En référence à la figure 7A, est représenté un deuxième mode de réalisation d'un flux F2a représentatif d'un contenu multimédia CM. Selon un exemple, le contenu multimédia CM est une coupure publicitaire contenant plusieurs contenus multimédia successifs CM₁,..., CMᵢ, ...CM_{K} (1≤i≤K). La coupure publicitaire est associée à un contenu audiovisuel CA dans le flux F2a. Un tel contenu audiovisuel CA est de type audio ou de type vidéo ou encore de type audio et vidéo.

Les contenus multimédia successifs CM₁,..., CMᵢ, ...CM_{K} appartiennent à un ensemble EM stocké dans le serveur de contenus SC des figures 1A et 1B et sont préalablement édités par un fournisseur de contenus, auquel appartient le serveur SC, pour pouvoir être joués les uns à la suite des autres sur la durée t_{Fad}-t_{Dad} du contenu multimédia CM. Selon un autre exemple, l'ensemble EM pourrait être stocké dans un autre serveur de contenus que le serveur SC.

Le flux F2a contient un marqueur temporel t_{DC} de début du contenu CA et un marqueur temporel t_{FC} de fin du contenu CA. Le flux F2a contient également :
- un marqueur temporel de début t_{D1}, respectivement de fin t_{F1} du contenu multimédia CM₁,
- un marqueur temporel de début t_{Di}, respectivement de fin t_{Fi} du contenu multimédia CMᵢ,
- un marqueur temporel de début t_{DK}, respectivement de fin t_{FK}, du contenu multimédia CM_{K}.

Dans l'exemple de la figure 7A, le contenu multimédia CM interrompt le contenu CA entre un instant prédéterminé t_{Dad} et un instant prédéterminé t_{Fad} qui sont marqués dans le flux F2a.

En référence à la figure 7B, est représenté un flux F2b qui est une variante du flux F2a de la figure 7A. Dans l'exemple de la figure 7B, le contenu CM est situé dans le flux F2b, juste avant le contenu audiovisuel CA.

En référence à la figure 7C, est représenté un flux F2c qui est une autre variante du flux F2a de la figure 7A. Dans l'exemple de la figure 7C, le contenu CM est situé dans le flux F2c, juste après le contenu audiovisuel CA.

Bien entendu, d'autres configurations sont possibles. Par exemple, plusieurs contenus multimédia CM pourraient interrompre le contenu CA. Selon un autre exemple, un contenu multimédia CM pourrait être situé dans le flux F2a, F2b ou F2c, juste avant et/ou juste après le contenu CA, tandis qu'au moins un autre contenu multimédia CM pourrait interrompre le contenu CA.

Dans les exemples des figures 7A à 7C, la signalisation des marqueurs temporels est réalisée directement dans le flux, c'est-à-dire in-band.

Selon un mode de réalisation, les marqueurs temporels précités sont des balises telles que par exemple du type SCTE 104/35.

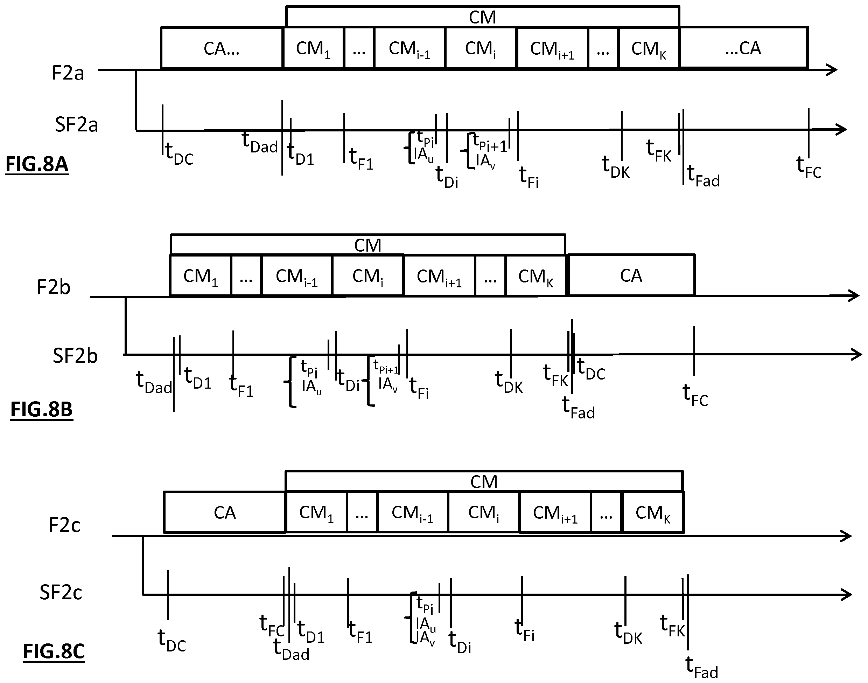

Selon un autre mode de réalisation représenté en lien avec les figures 8A à 8C, les marqueurs temporels précités sont indiqués :
- dans un sous-flux de signalisation SF2a associé au flux F2a,
- dans un sous-flux de signalisation SF2b associé au flux F2b,
- dans un sous-flux de signalisation SF2c associé au flux F2c.

La signalisation des marqueurs temporels est transmise dans le réseau de communication RC (figure 1A ou 1B) et non directement dans le flux qui contient le contenu audiovisuel CA et le contenu multimédia CM associé. Il s'agit ici d'une signalisation out-band.

Le sous-flux SF2a (respectivement SF2b, SF2c) contient des informations permettant l'analyse du flux F2a (respectivement F2b, F2c) par le terminal d'accès TAC de l'utilisateur UT des figures 1A et 1B.

A titre d'exemples non exhaustifs, les contenus multimédia CM₁,..., CMᵢ, ..., CM_{K} se succédant dans le contenu multimédia CM peuvent être des spots publicitaires, des bandes annonces de films, des clips musicaux, etc..., qui sont proposés par des fournisseurs de contenus qui sont partenaires :
- soit des chaînes de télévision CT₁ à CT_{X} ou des chaînes radio CR₁ à CR_{Y} représentées sur la figure 1A,
- soit du fournisseur de service qui détient la plateforme de service PFS de la figure 1B.

Bien entendu, les contenus multimédia CM₁,...,CMᵢ,...,CM_{K} n'ont pas nécessairement la même durée.

Selon l'invention, et comme cela sera décrit plus en détail dans la description ci-dessous, il est proposé de substituer, à la volée dans le flux F2a (respectivement F2b, F2c), la restitution d'au moins deux contenus multimédia successifs CMᵢ, CMᵢ₊₁ présents dans le contenu multimédia CM, par respectivement la restitution d'au moins deux contenus multimédia d'intérêt CMIᵤ, CMIᵥ de substitution qui sont adaptés ou non aux intérêts de l'utilisateur UT du terminal TER des figures 1A et 1B.

Selon l'invention, en référence aux figures 7A et 7B, le flux F2a (respectivement F2b) contient :
- à un instant prédéterminé t_{Pi} avant le début du contenu multimédia CMᵢ, une information IAᵤ d'accès au contenu multimédia d'intérêt CMIᵤ,
- à un instant prédéterminé t_{Pi+1} avant le début du contenu multimédia CMᵢ₊₁, une information IAᵥ d'accès au contenu multimédia d'intérêt CMIᵥ.

Selon un autre exemple représenté en référence à la figure 7C, le flux F2c contient à un instant prédéterminé t_{Pi} avant le début du contenu multimédia CMᵢ, une information IAᵤ d'accès au contenu multimédia d'intérêt CMIᵤ et une information IAᵥ d'accès au contenu multimédia d'intérêt CMIᵥ.

En référence à la figure 9A, selon une variante de réalisation du flux F2a de la figure 7A, est représenté un flux F'2a qui contient, directement dans le contenu audiovisuel CA :
- à un instant prédéterminé t_{Pi} avant le début du contenu multimédia CMᵢ, une information IAᵤ d'accès au contenu multimédia d'intérêt CMIᵤ,
- à un instant prédéterminé t_{Pi+1} avant le début du contenu multimédia CMᵢ₊₁, une information IAᵥ d'accès au contenu multimédia d'intérêt CMIᵥ.

En référence à la figure 9B, selon une variante de réalisation du flux F2c de la figure 7C, est représenté un flux F'2c qui contient, directement dans le contenu audiovisuel CA, à un instant prédéterminé t_{Pi} avant le début du contenu multimédia CMᵢ, une information IAᵤ d'accès au contenu multimédia d'intérêt CMIᵤ et une information IAᵥ d'accès au contenu multimédia d'intérêt CMIᵥ.

Dans le cas où les instants prédéterminés t_{Pi} et t_{Pi+1} sont marqués temporellement par deux balises SCTE 104/35 :
- en référence aux figures 7A, 7B et 9A, la balise SCTE 104/35 à l'instant prédéterminé t_{Pi} comprend un champ de données contenant l'information d'accès IAᵤ et la balise SCTE 104/35 à l'instant prédéterminé t_{Pi+1} comprend un champ de données contenant l'information d'accès IAᵥ ;
- en référence aux figures 7C et 9B, la balise SCTE 104/35 à l'instant prédéterminé t_{Pi} comprend un champ de données contenant l'information d'accès IAᵤ et l'information d'accès IAᵥ.

Dans le cas où les instants prédéterminés t_{Pi} et t_{Pi+1} sont renseignés dans les sous-flux de signalisation SF2a, SF2b, SF2c respectifs des flux F2a, F2b, F2c :
- en référence aux figures 8A et 8B, chaque sous-flux de signalisation SF2a, SF2b contient un champ de données associant l'instant prédéterminé t_{Pi} à l'information d'accès IAᵤ et un champ de données associant l'instant prédéterminé t_{Pi+1} à l'information d'accès IAᵥ,
- en référence à la figure 8C, le sous-flux de signalisation SF2c du flux F2c contient un champ de données associant l'instant prédéterminé t_{Pi} à l'information d'accès IAᵤ et à l'information d'accès IAᵥ.

Selon des variantes de réalisation des figures 7A à 7C, 8A à 8C et 9A à 9B, dans le cas où les flux F2a, F2b, F2c, F'2a, F'2c sont diffusés par une chaîne de télévision donnée, par exemple la chaîne de télévision CTⱼ de la figure 1A, ou bien par une chaîne de radio donnée, par exemple la chaîne de radio CRₖ de la figure 1A, les flux F2a, F2b, F2c, F'2a, F'2c, et les sous-flux SF2a, SF2b, SF2c contiennent chacun des marqueurs temporels associés à des informations d'accès à des contenus d'intérêt destinés à la substitution de la restitution de contenus multimédia diffusés sur une autre chaîne que la chaîne CTⱼ ou CRₖ.

Conformément à l'invention, l'information d'accès IAᵤ (respectivement IAᵥ) est, à titre d'exemples non exhaustifs :
- une instruction adressée au terminal d'accès TAC des figures 1A et 1B pour que ce dernier détermine, pour un contenu courant considéré parmi les contenus multimédia successifs CM₁,..., CMᵢ, ...CM_{K}, par exemple le contenu CMᵢ₋₁, si la restitution du contenu multimédia CMᵢ suivant, est à substituer ou non par la restitution d'un contenu d'intérêt sélectionné dans l'ensemble ES de contenus d'intérêt des figures 1A et 1B,
- une adresse d'accès, par exemple une URL (de l'anglais « Uniform Resource Locator »), via un réseau de communication, par exemple le réseau RC des figures 1A et 1B, à un contenu d'intérêt de l'ensemble ES de contenus d'intérêt CMI₁, CMI₂,..., CMIᵤ,..., CMIᵥ,..., CMI_{T},
- une information déduite d'une information correspondant au prochain contenu multimédia à lire, telle que par exemple une metadonnée, un mot destiné à être prononcé ou affiché durant la restitution de ce contenu multimédia, etc...,
- un identifiant de contenu multimédia d'intérêt, tel que par exemple le nom du fichier contenant ce contenu multimédia d'intérêt,
- au moins une information de profil utilisateur, telle que par exemple un ou plusieurs numéros de départements, un âge ou une fourchette d'âges, la valeur d'un revenu ou une fourchette de revenus, une durée de visualisation de la télévision en heures/jour, etc....

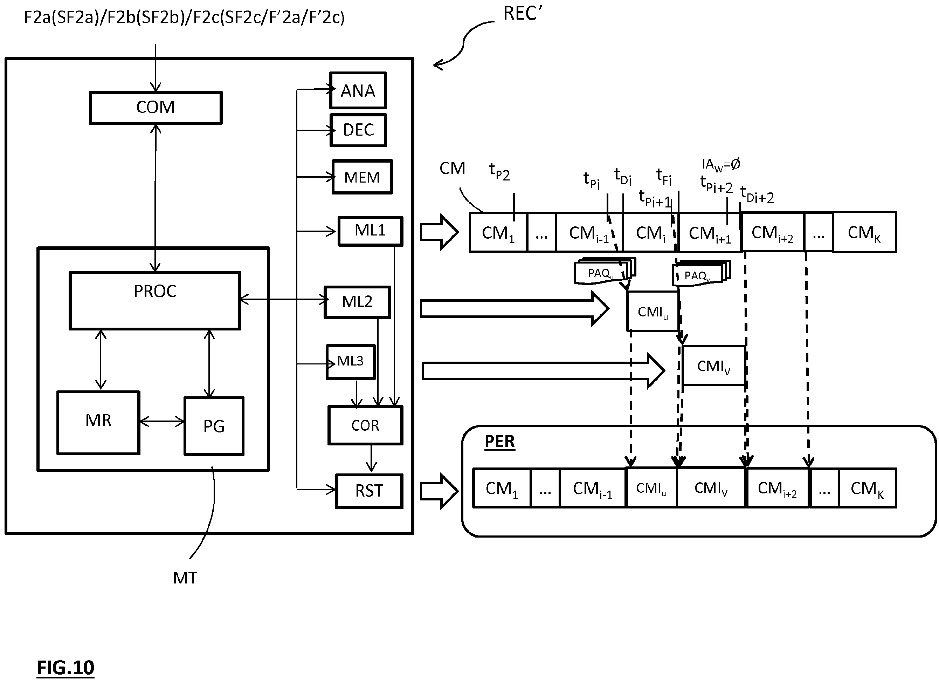

En relation avec la figure 10, on considère maintenant la structure simplifiée d'un dispositif REC' de réception de flux selon un deuxième mode de réalisation de l'invention. Le dispositif REC' est en tout point identique au dispositif REC de la figure 4. Les éléments qui le composent sont donc représentés par les mêmes références numériques que les éléments de la figure 4.

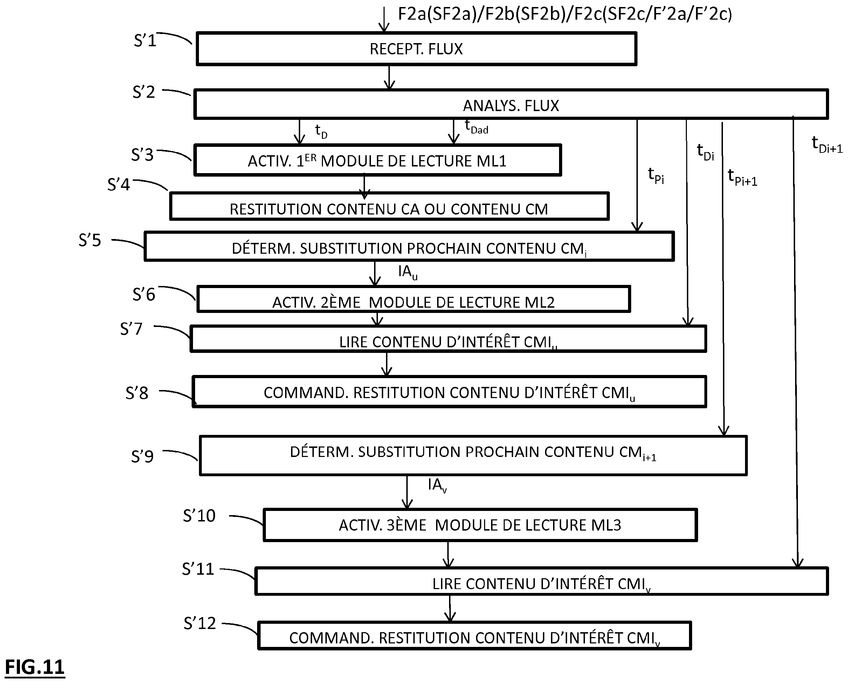

Un tel dispositif de réception REC' est contenu dans le terminal d'accès TAC des figures 1A et 1B, selon un exemple de réalisation de l'invention. Un tel dispositif de réception de flux est adapté pour mettre en oeuvre le procédé de réception de flux selon le deuxième mode de réalisation qui va être décrit ci-dessous en référence à la figure 11.

Dans le dispositif de réception REC' de la figure 10 :
- le premier module de lecture ML1 est adapté pour lire le contenu audiovisuel CA contenu dans le flux, y compris les contenus multimédia successifs CM₁,..., CMᵢ, ...CM_{K} du contenu multimédia CM associé au contenu audiovisuel CA,
- le module DEC est adapté pour mettre en oeuvre le décodage audio/vidéo des données du contenu audiovisuel CA et des contenus multimédia successifs du contenu CM, lesdites données pouvant être de type texte, audio, vidéo ou audiovisuel,
- une mémoire MEM de stockage de données, telle que par exemple une mémoire tampon.

Le dispositif de réception REC' comprend des ressources physiques et/ou logicielles, en particulier un module de traitement MT pour mettre en oeuvre le procédé de réception de flux selon l'invention, qui va être décrit ci-dessous.

Selon le deuxième mode de réalisation de l'invention, pour au moins des premier et deuxième contenus multimédia successifs CMᵢ, CMᵢ₊₁ du contenu multimédia CM associé au contenu CA :
- le deuxième module de lecture ML2 lit un premier contenu multimédia d'intérêt CMIᵤ parallèlement à la lecture du contenu multimédia CMᵢ par le premier module de lecture ML1,
- le troisième module de lecture ML3 lit un deuxième contenu multimédia d'intérêt CMIᵥ parallèlement à la lecture du contenu multimédia CMᵢ₊₁ par le premier module de lecture ML1,
- le module de contrôle de restitution COR commande la restitution, par le module de restitution RST :
   - soit du contenu audiovisuel CA lu par le module de lecture ML1, soit des différents contenus multimédia CM₁,..., CMᵢ, ...CM_{K} se succédant dans le contenu multimédia CM et lus par le module de lecture ML1, en prenant en compte les informations de balisage indiquées dans le flux reçu et la et/ou les information(s) d'accès associée(s) à ces informations de balisage,
   - soit de chaque contenu d'intérêt lu par le module de lecture ML2 (respectivement ML3), à la place d'un contenu multimédia donné CMᵢ (respectivement CMᵢ₊₁) du contenu multimédia CM, en prenant en compte les informations de balisage indiquées dans le flux reçu et la et/ou les information(s) d'accès associée(s) à ces informations de balisage.

Un deuxième mode de réalisation du procédé de réception de flux selon l'invention est maintenant décrit en relation avec la figure 11. Ce deuxième mode de réalisation est mis en oeuvre par le dispositif de réception REC' de la figure 9.

Un tel procédé se déroule comme suit :
En S'1, le module de communication COM de la figure 10 reçoit un flux F2a (respectivement F2b, F2c, F'2a, F'2c) du type de ceux représentés sur les figures 7A à 7C, 8A à 8C, 9A à 9B. Comme déjà expliqué plus haut dans la description, un tel flux est représentatif d'un contenu audiovisuel CA et comprend, relativement au contenu CA, au moins un contenu multimédia CM à l'intérieur duquel se succèdent une pluralité de contenus CM₁,..., CMᵢ, ...CM_{K}.

En S'2, le module d'analyse ANA de la figure 10 lit à la suite les différents marqueurs temporels insérés dans le flux.

En S'3, suite à la lecture du marqueur temporel t_{DC} indiquant le début du contenu CA (figs. 7A, 7C, 8A, 8C, 9A, 9B) ou bien du marqueur temporel t_{Dad} indiquant le début du contenu multimédia CM (figs. 7B, 8B), le module de traitement MT active le premier module de lecture ML1 pour lire, soit le contenu CA, soit directement les contenus multimédia successifs CM₁,..., CMᵢ, ...CM_{K}.

En S'4, le module de commande de restitution COR commande le module de restitution RST pour qu'il restitue le contenu audiovisuel CA ou le contenu multimédia CM sur le dispositif périphérique PER de la figure 10, au fur et à mesure qu'ils sont l'un ou l'autre lus en S'3.

En S'5, à un instant prédéterminé t_{Pi} avant l'instant t_{Di} de début d'un contenu multimédia CMᵢ considéré dans le flux F2a (respectivement F2b, F2c, F'2a, F'2c), le module d'analyse ANA détermine que la restitution du contenu multimédia CMᵢ est à remplacer par la restitution d'un contenu multimédia d'intérêt de même durée que le contenu multimédia CMᵢ et qui correspond aux intérêts de l'utilisateur UT du dispositif de réception REC'.

A cet effet, le module d'analyse ANA lit dans le flux F2a (respectivement F2b, F2c, F'2a, F'2c) une information IAᵤ d'accès au contenu multimédia d'intérêt CMIᵤ.

On suppose qu'à l'instant prédéterminé t_{Pi} avant l'instant t_{Di} de début d'un contenu multimédia CMᵢ, le premier module de lecture ML1 lit le contenu multimédia CMᵢ₋₁ qui précède temporellement le contenu multimédia CMᵢ dans le segment temporel CMᵢ.

En S'6, le module de traitement MT procède à l'activation du deuxième module de lecture ML2 pour que ce dernier charge les premiers paquets de données PAQ_{U} relatives au contenu d'intérêt CMIᵤ, avant l'instant de début t_{Di} du contenu multimédia CMᵢ.

En S'7, à l'instant de début t_{Di} du contenu multimédia CMᵢ, le deuxième module de lecture ML2 lit le contenu d'intérêt CMIᵤ.

En S'8, à l'instant de début t_{Di} du contenu multimédia CMᵢ, le module de contrôle de restitution COR commande alors la restitution, par le module de restitution RST, du contenu d'intérêt CMIᵤ lu par le module de lecture ML2, à la place de la restitution du contenu multimédia CMᵢ qui est lu par le premier module de lecture ML1. Comme représenté sur la figure 10, la restitution du contenu multimédia d'intérêt CMIᵤ est mise en oeuvre exactement entre l'instant t_{Di} de début et l'instant t_{Fi} de fin du contenu multimédia CMᵢ, de telle sorte que l'utilisateur UT ne perçoit pas la substitution de la restitution du contenu multimédia CMᵢ qui est mise en oeuvre, de façon avantageuse, sans coupure dans le flux.

Aucun phénomène de latence n'est provoqué entre l'instant t_{Fi-1} où le premier module de lecture ML1 termine de lire le contenu multimédia CMᵢ₋₁, dont la restitution synchrone est mise en oeuvre par le module de restitution RST, et l'instant t_{Di} où le deuxième module de lecture ML2 commence à lire le contenu d'intérêt CMIᵤ, puisque le module de lecture ML2 disposait déjà des premiers paquets de données PAQ_{U} du contenu d'intérêt CMIᵤ, tels que obtenus en S'6.

En S'9, à un instant prédéterminé t_{Pi+1} avant l'instant t_{Di+1} de début du contenu multimédia CMᵢ₊₁ qui suit directement le contenu multimédia CMᵢ dans le contenu multimédia CM, et alors que le deuxième module de lecture ML2 est encore en train de lire le contenu multimédia d'intérêt CMIᵤ et que le module COR en commande la restitution de façon synchrone, le module d'analyse ANA détermine que la restitution du contenu multimédia CMᵢ₊₁ est à remplacer par un contenu multimédia d'intérêt CMIᵥ de même durée que le contenu multimédia CMᵢ₊₁.

A cet effet, le module d'analyse ANA lit dans le flux F2a (respectivement F2b, F2c, F'2a, F'2c) une information IAᵥ d'accès audit contenu multimédia d'intérêt CMIᵥ.

En S'10, le module de traitement MT procède à l'activation du troisième module de lecture ML3 pour que ce dernier charge les premiers paquets de données PAQᵥ relatives au contenu d'intérêt CMIᵥ, avant l'instant de début t_{Di+1} du contenu multimédia CMᵢ₊₁.

En S'11, à l'instant de début t_{Di+1} du contenu multimédia CMᵢ₊₁, le module de traitement MT désactive le deuxième module de lecture ML2, le troisième module de lecture ML3 lisant alors le contenu d'intérêt CMIᵥ.

En S'12, à l'instant de début t_{Di+1} du contenu multimédia CMᵢ₊₁, le module de contrôle de restitution COR commande alors la restitution du contenu d'intérêt CMIᵥ à la place de la restitution du contenu multimédia CMᵢ₊₁ qui est en train d'être lu par le premier module de lecture ML1. Comme représenté sur la figure 10, la restitution du contenu d'intérêt CMIᵥ est mise en oeuvre exactement entre l'instant t_{Di+1} de début et l'instant t_{Fi+1} de fin du contenu multimédia CMᵢ₊₁, de telle sorte que l'utilisateur UT ne perçoit pas la substitution qui est ainsi mise en oeuvre sans coupure dans le flux.

Aucun phénomène de latence n'est provoqué entre l'instant t_{Fi} où le deuxième module de lecture ML2 termine de lire le contenu d'intérêt CMIᵤ et l'instant t_{Di+1} où le troisième module de lecture ML3 commence à lire le contenu d'intérêt CMIᵥ, puisque le module de lecture ML3 disposait déjà des premiers paquets de données PAQᵥ du contenu d'intérêt CMIᵥ, tels que obtenus en S'10.

En alternative au procédé qui vient d'être décrit ci-dessus, les opérations S'6 et S'10 sont réalisées ensemble, à l'instant prédéterminé t_{Pi} avant l'instant t_{Di} de début d'un contenu multimédia CMᵢ considéré dans le flux, ce qui permet d'anticiper encore davantage le préchargement des données du contenu d'intérêt CMIᵥ.

Grâce au procédé de réception de flux qui vient d'être décrit, il est ainsi possible de substituer à la volée la restitution d'au moins deux contenus multimédia qui se succèdent dans le contenu multimédia CM associé à un contenu audiovisuel CA, par respectivement la restitution de deux contenus multimédia de substitution ou conformes aux intérêts de l'utilisateur UT.

Bien entendu, plus de deux contenus multimédia successifs présents dans le contenu multimédia CM pourront être substitués. Ainsi par exemple, les modules de lecture ML2 et ML3 seront à nouveau respectivement activés si le module de traitement MT détermine que par exemple les contenus multimédias successifs CMᵢ₊₂, CMᵢ₊₃, puis CMᵢ₊₅, CMᵢ₊₆ sont à substituer, etc...

Dans l'exemple de la figure 10, on considère que le contenu multimédia CMᵢ₊₂, qui suit le contenu multimédia CMᵢ₊₁ dans le contenu multimédia, n'est pas à substituer parce que par exemple, l'information IA_{w} d'accès à un contenu d'intérêt CMI_{w} du contenu CMᵢ₊₂, qui est lue par le module d'analyse ANA à un instant prédéterminé t_{Pi+2} avant l'instant t_{Di+2} de début du contenu CMᵢ₊₂, ne renvoie finalement vers aucun contenu d'intérêt. Dans cet exemple, donc, à l'instant t_{Di+2}, le premier module de lecture ML1 lit le contenu multimédia CMᵢ₊₂ qui est restitué de façon synchrone sur le dispositif PER, le troisième module de lecture ML3 étant désactivé.

Selon un mode de réalisation préféré, les contenus d'intérêt CMIᵤ et CMIᵥ accédés via respectivement les informations d'accès IAᵤ et IAᵥ sont téléchargés dans la mémoire MEM du dispositif de réception REC', préalablement à l'instant t_{Dad} de début du contenu multimédia CM, sous la forme de fichiers, tels que par exemple :
- de type mp4 et ayant par exemple pour nom « spotu.mp4 » et « spotv.mp4 »,
- de type mp3 et ayant par exemple pour nom « spotu.mp3 » et « spotv.mp3 »,
- de type jpeg et ayant par exemple pour nom « spotu.jpg » et « spotv.jpg ».

Chaque contenu d'intérêt CMIᵤ et CMIᵥ est téléchargé à partir du serveur de contenus SC des figures 1A et 1B, suite à la réception d'une requête en provenance du dispositif de réception REC', ladite requête contenant :
- une et/ou plusieurs informations de critère CRT de l'utilisateur UT, telles que mentionnées ci-dessus,
- un identifiant du dispositif de réception REC',
- un identifiant I_{CM} associé soit au contenu CMᵢ (respectivement CMᵢ₊₁), soit au contenu multimédia CM qui comprend ce contenu.

Un tel mode de réalisation est mis en oeuvre dans le cas où le contenu CA, que l'utilisateur UT est en train de visualiser et/ou d'écouter, précède le contenu multimédia CM, comme dans le cas des figures 7A, 7C, 8A, 8C, 9A, 9B.

Selon ce mode de réalisation préféré, les informations d'accès IAᵤ, IA_{V} lues par le module d'analyse ANA sont des identifiants des contenus d'intérêt CMIᵤ, CMIᵥ précités.

Selon un autre mode de réalisation, en référence aux figures 1A, 1B et 10, dans le cas par exemple où l'utilisateur UT allume la télévision ou la radio au moment de la diffusion du contenu multimédia CM, et que par exemple, le contenu multimédia CMᵢ₊₁ est en cours de restitution, les informations d'accès IAᵤ, IA_{V} lues par le module d'analyse ANA sont des liens URL permettant au dispositif de réception REC' d'accéder respectivement aux contenus d'intérêt CMIᵤ, CMIᵥ stockés dans le serveur de contenus SC des figures 1A et 1B, afin qu'ils soient directement lus par respectivement les modules de lecture ML2 et ML3. Chaque URL est contenue dans une requête en provenance du dispositif de réception REC', ladite requête contenant :
- une et/ou plusieurs informations de critère CRT de l'utilisateur UT, telles que mentionnées ci-dessus,
- un identifiant du dispositif de réception REC',
- un identifiant I_{CM} associé soit au contenu CMᵢ (respectivement CMᵢ₊₁), soit au contenu multimédia CM qui comprend ce contenu.

En variante de cet autre mode de réalisation et en référence aux figures 8A à 8C, les informations d'accès IAᵤ, IAᵥ lues par le module d'analyse ANA sont des pointeurs de flux permettant au dispositif de réception REC' d'accéder aux contenus d'intérêt CMIᵤ, CMIᵥ directement à partir des sous-flux SF2a (respectivement SF2b, SF2c).

Selon un autre mode de réalisation, et en référence aux figures 1A, 1B et 10, chaque information d'accès IAᵤ, IAᵥ contient au moins une information de profil utilisateur, telle que par exemple un ou plusieurs numéros de départements, un âge ou une fourchette d'âges, la valeur d'un revenu annuel ou une fourchette de revenus annuels, une durée de visualisation de la télévision en heures/jour, etc....Suite à la lecture de chaque information d'accès IAᵤ, IA_{V}, par le module d'analyse ANA, le module de traitement MT du dispositif de réception REC' vérifie si ladite au moins une information de profil correspond à au moins un critère CRT de l'utilisateur UT. Si tel est le cas, il est procédé à la substitution de la restitution des contenus multimédia CMᵢ, CMᵢ₊₁ par respectivement la restitution des contenus multimédia d'intérêt CMIᵤ, CMIᵥ. Si tel n'est pas le cas, les modules de lecture ML2 et ML3 ne sont pas activés et le premier module de lecture ML1 lit classiquement les contenus CMᵢ, CMᵢ₊₁ dont la restitution successive sur le dispositif PER de la figure 10 est mise en oeuvre par le module de restitution RST.

Selon encore un autre mode de réalisation, chaque information d'accès IAᵤ, IAᵥ est une instruction transmise au module de traitement MT des figures 1A et 1B, qui détermine, pour un contenu multimédia CMᵢ donné, s'il convient ou non de procéder à la substitution de ce contenu, en fonction de différents critères qui peuvent être liés à l'abonnement de l'utilisateur UT, aux capacités du dispositif de réception REC', à la bande passante évaluée à l'instant prédéterminé t_{Pi}, avant le début du contenu multimédia CMᵢ.

Le deuxième mode de réalisation qui vient d'être décrit en référence aux figures 7 à 11 est particulièrement adapté à la substitution de spots publicitaires destinés à être visualisés/écoutés par l'utilisateur avant ou après la diffusion du contenu audiovisuel CA ou encore durant l'interruption du contenu CA, et cela au cas par cas, c'est-à-dire spot par spot. Ainsi, l'utilisateur sera beaucoup moins enclin à changer de chaîne ou à passer la coupure publicitaire, puisque les spots d'intérêt restitués à la place des spots prévus par défaut dans la coupure publicitaire seront en adéquation avec les intérêts de l'utilisateur, autrement dit son profil et/ou ses goûts personnels, à l'instant courant de diffusion du contenu audiovisuel.

La portée de la protection de la présente invention est définie dans les revendications annexées. Tout mode de réalisation ne tombant pas dans cette portée doit être interprété comme des exemples qui ne décrivent pas des parties de l'invention.

## Revendications

1. Procédé de réception d'un flux (F1a ; F1b) représentatif d'un contenu multimédia (CM), mettant en oeuvre ce qui suit, au niveau d'un dispositif de réception du flux :
- activer (S3) un premier module de lecture pour lire le contenu multimédia,
- restituer (S4) le contenu multimédia lu,
ledit procédé étant **caractérisé en ce qu'**il met en oeuvre ce qui suit :
- déterminer (S5, S9) dans le flux, à un premier instant (t_{Pi}) et à un deuxième instant (t_{Pi+1}) qui précèdent respectivement des premier (t_{Di}) et deuxième instants (t_{Di+1}) de restitution de première et deuxième portions (PMi, PMᵢ₊₁) contigües du contenu multimédia, que la restitution desdites première et deuxième portions est à modifier par la restitution de premier (CMIᵤ) et deuxième (CMIᵥ) contenus multimédia respectifs, ladite détermination étant mise en oeuvre à l'aide d'une première information d'accès au premier contenu multimédia et d'une deuxième information d'accès au deuxième contenu multimédia, lesdites première et deuxième informations d'accès étant lues dans le flux en association avec ledit premier instant (t_{Pi}) précédant les premier et deuxième instants de restitution ou en association avec respectivement les premier (t_{Pi}) et deuxième (t_{Pi+1}) instants précédant les premier et deuxième instants de restitution,
- activer (S6, S10) :
- un deuxième module de lecture pour lire (S7) le premier contenu multimédia, accédé à l'aide de ladite première information d'accès, au premier instant de restitution de la première portion du contenu multimédia, ledit deuxième module de lecture étant activé avant ledit premier instant de restitution,
- un troisième module de lecture pour lire (S11) le deuxième contenu multimédia, accédé à l'aide de ladite deuxième information d'accès, au deuxième instant de restitution de la deuxième portion du contenu multimédia, ledit troisième module de lecture étant activé avant l'instant de fin de la première portion du contenu multimédia,
- au premier instant de restitution de la première portion du contenu multimédia, commander (S8) la restitution dans ledit flux du premier contenu multimédia lu, à la place ou en plus de la première portion du contenu multimédia,
- au deuxième instant de restitution de la deuxième portion du contenu multimédia, commander (S12) la restitution dans ledit flux du deuxième contenu multimédia lu, à la place ou en plus de la deuxième portion du contenu multimédia.

2. Procédé de réception selon la revendication 1, dans lequel la modification de la restitution d'une portion donnée du contenu multimédia consiste à substituer la restitution de la portion donnée par la restitution d'un des premier et deuxième contenus multimédia.

3. Procédé de réception selon la revendication 1, dans lequel la modification de la restitution d'une portion donnée du contenu multimédia consiste à restituer simultanément la portion donnée et l'un des premier et deuxième contenus multimédia.

4. Procédé de réception selon la revendication 1, dans lequel l'activation du deuxième et du troisième module de lecture est mise en oeuvre suite à la lecture dans le flux, à un instant (t_{Pi}) précédant le début de la première portion du contenu multimédia, d'une information d'accès (IAᵤ) au premier contenu multimédia (CMIᵤ), et à un instant (t_{Pi+1}) précédant le début de la deuxième portion du contenu multimédia, d'une information d'accès (IAᵥ) au deuxième contenu multimédia (CMIᵥ).

5. Procédé de réception selon la revendication 1, dans lequel l'activation du deuxième et du troisième module de lecture est mise en oeuvre suite à la lecture dans le flux, à un instant (t_{Pi}) précédant le début de la première portion du contenu multimédia, d'une information d'accès (IAᵤ) au premier contenu multimédia et d'une information d'accès (IAᵥ) au deuxième contenu multimédia.

6. Procédé de réception selon la revendication 4 ou la revendication 5, dans lequel l'information d'accès est déduite d'une information correspondant au contenu multimédia (CM).

7. Procédé de réception selon la revendication 4 ou la revendication 5, dans lequel l'information d'accès est un identifiant de contenu multimédia.

8. Procédé de réception selon la revendication 4 ou la revendication 5, dans lequel l'information d'accès contient une instruction pour déterminer si la restitution d'une portion donnée du contenu multimédia, qui n'a pas encore été lue, est modifiable ou non par la restitution d'un contenu multimédia.

9. Procédé de réception selon la revendication 4 ou la revendication 5, dans lequel l'information d'accès est une adresse d'accès, via un réseau de communication, au premier et/ou au deuxième contenu multimédia.

10. Procédé de réception selon la revendication 4 ou la revendication 5, dans lequel l'information d'accès est une information de profil utilisateur.

11. Procédé de réception selon l'une quelconque des revendications 1 à 10, dans lequel le premier et/ou le deuxième contenu multimédia conforme est accessible :
- depuis le dispositif de réception (REC), et/ou
- depuis un dispositif (SC) de stockage de contenus connecté au dispositif de réception via un réseau de communication, et/ou
- dans un sous-flux (SF1a, SF1b) associé au flux reçu.

12. Dispositif (REC) de réception d'un flux représentatif d'un contenu multimédia (CM), comprenant :
- un premier module de lecture (ML1) pour lire le contenu multimédia (CM),
- un module de restitution (RST) pour restituer le contenu multimédia lu,
ledit dispositif étant **caractérisé en ce qu'**il comprend un module de traitement (MT) qui est agencé pour mettre en oeuvre ce qui suit :
- déterminer dans le flux, à un premier instant (t_{Pi}) et à un deuxième instant (t_{Pi+1}) qui précèdent respectivement des premier (t_{Di}) et deuxième instants (t_{Di+1}) de restitution de première et deuxième portions contigües du contenu multimédia, que la restitution desdites première et deuxième portions est à modifier par la restitution de premier (CMIᵤ) et deuxième (CMIᵥ) contenus multimédia respectifs, ladite détermination étant mise en oeuvre à l'aide d'une première information d'accès au premier contenu multimédia et d'une deuxième information d'accès au deuxième contenu multimédia, lesdites première et deuxième informations d'accès étant lues dans le flux en association avec ledit premier instant (t_{Pi}) précédant les premier et deuxième instants de restitution ou en association avec respectivement les premier (t_{Pi}) et deuxième (t_{Pi+1}) instants précédant les premier et deuxième instants de restitution,
- activer :
- un deuxième module de lecture (ML2) pour lire le premier contenu multimédia, accédé à l'aide de ladite première information d'accès, au premier instant de restitution de la première portion du contenu multimédia, ledit deuxième module de lecture étant activé avant ledit premier instant de restitution,
- un troisième module de lecture (ML3) pour lire le deuxième contenu multimédia, accédé à l'aide de ladite deuxième information d'accès, au deuxième instant de restitution de la deuxième portion du contenu multimédia, le troisième module de lecture étant activé avant l'instant de fin de la première portion du contenu multimédia,
- au premier instant de restitution de la première portion du contenu multimédia, commander la restitution dans ledit flux du premier contenu multimédia lu, à la place ou en plus de la première portion du contenu multimédia,
- au deuxième instant de restitution de la deuxième portion du contenu multimédia, commander la restitution dans ledit flux du deuxième contenu multimédia lu, à la place ou en plus de la deuxième portion du contenu multimédia.

13. Programme d'ordinateur comportant des instructions qui implémentent le procédé de réception selon l'une quelconque des revendications 1 à 11, lorsque ledit programme est exécuté sur un ordinateur.

14. Support d'enregistrement lisible par un ordinateur sur lequel est enregistré un programme d'ordinateur comprenant des instructions qui implémentent le procédé de de réception selon l'une quelconque des revendications 1 à 11, lorsque ledit programme est exécuté par un ordinateur.

## Patentansprüche

1. Verfahren für den Empfang eines Streams (F1a; F1b), der für einen Multimedia-Inhalt (CM) repräsentativ ist, das an einer Empfangsvorrichtung für den Stream Folgendes umsetzt:
- Aktivieren (S3) eines ersten Lesemoduls, um den Multimedia-Inhalt zu lesen,
- Wiedergeben (S4) des gelesenen Multimedia-Inhalts, wobei das Verfahren **dadurch gekennzeichnet ist, dass** es Folgendes umsetzt:
- Bestimmen (S5, S9), in dem Stream, zu einem ersten Zeitpunkt (t_{Pi}) und zu einem zweiten Zeitpunkt (t_{Pi+1}), die jeweils einem ersten (t_{Di}) bzw. einem zweiten Zeitpunkt (t_{Di+1}) einer Wiedergabe eines ersten und eines zweiten Abschnitts (PMᵢ, PMᵢ₊₁) des Multimedia-Inhalts, die zusammenhängen, vorausgehen, dass die Wiedergabe des ersten und des zweiten Abschnitts durch die Wiedergabe eines ersten (CMIᵤ) bzw. eines zweiten (CMIᵥ) Multimedia-Inhalts modifiziert werden soll, wobei die Bestimmung mit Hilfe einer ersten Information für den Zugriff auf den ersten Multimedia-Inhalt und einer zweiten Information für den Zugriff auf den zweiten Multimedia-Inhalt umgesetzt wird, wobei die erste und die zweite Zugriffsinformation in dem Stream in Assoziation mit dem ersten Zeitpunkt (t_{Pi}), der dem ersten und dem zweiten Wiedergabezeitpunkt vorausgeht, oder in Assoziation mit dem ersten (t_{Pi}) bzw. dem zweiten (t_{Pi+1}) Zeitpunkt, die dem ersten und dem zweiten Wiedergabezeitpunkt vorausgehen, gelesen werden,
- Aktivieren (S6, S10):
- eines zweiten Lesemoduls, um den ersten Multimedia-Inhalt, auf den mit Hilfe der ersten Zugriffsinformation zugegriffen wird, zu dem ersten Wiedergabezeitpunkt des ersten Abschnitts des Multimedia-Inhalts zu lesen (S7), wobei das zweite Lesemodul vor dem ersten Wiedergabezeitpunkt aktiviert wird,
- eines dritten Lesemoduls, um den zweiten Multimedia-Inhalt, auf den mit Hilfe der zweiten Zugriffsinformation zugegriffen wird, zu dem zweiten Wiedergabezeitpunkt des zweiten Abschnitts des Multimedia-Inhalts zu lesen (S11), wobei das dritte Lesemodul vor dem Endzeitpunkt des ersten Abschnitts des Multimedia-Inhalts aktiviert wird,
- zu dem ersten Wiedergabezeitpunkt des ersten Abschnitts des Multimedia-Inhalts, Befehlen (S8) der Wiedergabe, in dem Stream, des gelesenen ersten Multimedia-Inhalts anstelle des oder zusätzlich zu dem ersten Abschnitt des Multimedia-Inhalts,
- zu dem zweiten Wiedergabezeitpunkt des zweiten Abschnitts des Multimedia-Inhalts, Befehlen (S12) der Wiedergabe, in dem Stream, des gelesenen zweiten Multimedia-Inhalts anstelle des oder zusätzlich zu dem zweiten Abschnitt des Multimedia-Inhalts.

2. Empfangsverfahren nach Anspruch 1, wobei die Modifizierung der Wiedergabe eines gegebenen Abschnitts des Multimedia-Inhalts darin besteht, die Wiedergabe des gegebenen Abschnitts durch die Wiedergabe von einem von dem ersten und dem zweiten Multimedia-Inhalt zu ersetzen.

3. Empfangsverfahren nach Anspruch 1, wobei die Modifizierung der Wiedergabe eines gegebenen Abschnitts des Multimedia-Inhalts darin besteht, den gegebenen Abschnitt und einen von dem ersten und dem zweiten Multimedia-Inhalt simultan wiederzugeben.

4. Empfangsverfahren nach Anspruch 1, wobei die Aktivierung des zweiten und des dritten Lesemoduls im Anschluss an das Lesen, in dem Stream, zu einem Zeitpunkt (t_{Pi}), der dem Anfang des ersten Abschnitts des Multimedia-Inhalts vorausgeht, einer Information für den Zugriff (IAᵤ) auf den ersten Multimedia-Inhalt (CMIᵤ), und, zu einem Zeitpunkt (t_{Pi+1}), der dem Anfang des zweiten Abschnitts des Multimedia-Inhalts vorausgeht, einer Information für den Zugriff (IAᵥ) auf den zweiten Multimedia-Inhalt (CMIᵥ) umgesetzt wird.

5. Empfangsverfahren nach Anspruch 1, wobei die Aktivierung des zweiten und des dritten Lesemoduls im Anschluss an das Lesen, in dem Stream, zu einem Zeitpunkt (t_{Pi}), der dem Anfang des ersten Abschnitts des Multimedia-Inhalts vorausgeht, einer Information für den Zugriff (IAᵤ) auf den ersten Multimedia-Inhalt und einer Information für den Zugriff (IAᵥ) auf den zweiten Multimedia-Inhalt umgesetzt wird.

6. Empfangsverfahren nach Anspruch 4 oder Anspruch 5, wobei die Zugriffsinformation von einer Information abgeleitet wird, die dem Multimedia-Inhalt (CM) entspricht.

7. Empfangsverfahren nach Anspruch 4 oder Anspruch 5, wobei die Zugriffsinformation eine Kennung eines Multimedia-Inhalts ist.

8. Empfangsverfahren nach Anspruch 4 oder Anspruch 5, wobei die Zugriffsinformation eine Anweisung enthält, um zu bestimmen, ob die Wiedergabe eines gegebenen Abschnitts des Multimedia-Inhalts, der noch nicht gelesen wurde, durch die Wiedergabe eines Multimedia-Inhalts zu modifizieren ist oder nicht.

9. Empfangsverfahren nach Anspruch 4 oder Anspruch 5, wobei die Zugriffsinformation eine Adresse für den Zugriff, über ein Kommunikationsnetzwerk, auf den ersten und/oder den zweiten Multimedia-Inhalt ist.

10. Empfangsverfahren nach Anspruch 4 oder Anspruch 5, wobei die Zugriffsinformation eine Benutzerprofilinformation ist.

11. Empfangsverfahren nach einem beliebigen der Ansprüche 1 bis 10, wobei auf den ersten und/oder den zweiten zweckentsprechenden Multimedia-Inhalt zugegriffen werden kann:
- von der Empfangsvorrichtung (REC) aus und/oder
- von einer Vorrichtung (SC) zur Speicherung von Inhalten aus, die über ein Kommunikationsnetzwerk mit der Empfangsvorrichtung verbunden ist, und/oder
- in einem Sub-Stream (SF1a, SF1b), der mit dem empfangenen Stream assoziiert ist.

12. Vorrichtung (REC) für den Empfang eines Streams, der für einen Multimedia-Inhalt (CM) repräsentativ ist, beinhaltend:
- ein erstes Lesemodul (ML1), um den Multimedia-Inhalt (CM) zu lesen,
- ein Wiedergabemodul (RST), um den gelesenen Multimedia-Inhalt wiederzugeben,
wobei die Vorrichtung **dadurch gekennzeichnet ist, dass** sie ein Verarbeitungsmodul (MT) beinhaltet, das dazu angeordnet ist, Folgendes umzusetzen:
- Bestimmen, in dem Stream, zu einem ersten Zeitpunkt (t_{Pi}) und zu einem zweiten Zeitpunkt (t_{Pi+1}), die jeweils einem ersten (t_{Di}) bzw. einem zweiten Zeitpunkt (t_{Di+1}) einer Wiedergabe eines ersten und eines zweiten Abschnitts des Multimedia-Inhalts, die zusammenhängen, vorausgehen, dass die Wiedergabe des ersten und des zweiten Abschnitts durch die Wiedergabe eines ersten (CMIᵤ) bzw. eines zweiten (CMIᵥ) Multimedia-Inhalts modifiziert werden soll, wobei die Bestimmung mit Hilfe einer ersten Information für den Zugriff auf den ersten Multimedia-Inhalt und einer zweiten Information für den Zugriff auf den zweiten Multimedia-Inhalt umgesetzt wird, wobei die erste und die zweite Zugriffsinformation in dem Stream in Assoziation mit dem ersten Zeitpunkt (t_{Pi}), der dem ersten und dem zweiten Wiedergabezeitpunkt vorausgeht, oder in Assoziation mit dem ersten (t_{Pi}) bzw. dem zweiten (t_{Pi+1}) Zeitpunkt, die dem ersten und dem zweiten Wiedergabezeitpunkt vorausgehen, gelesen werden,
- Aktivieren:
- eines zweiten Lesemoduls (ML2), um den ersten Multimedia-Inhalt, auf den mit Hilfe der ersten Zugriffsinformation zugegriffen wird, zu dem ersten Wiedergabezeitpunkt des ersten Abschnitts des Multimedia-Inhalts zu lesen, wobei das zweite Lesemodul vor dem ersten Wiedergabezeitpunkt aktiviert wird,
- eines dritten Lesemoduls (ML3), um den zweiten Multimedia-Inhalt, auf den mit Hilfe der zweiten Zugriffsinformation zugegriffen wird, zu dem zweiten Wiedergabezeitpunkt des zweiten Abschnitts des Multimedia-Inhalts zu lesen, wobei das dritte Lesemodul vor dem Endzeitpunkt des ersten Abschnitts des Multimedia-Inhalts aktiviert wird,
- zu dem ersten Wiedergabezeitpunkt des ersten Abschnitts des Multimedia-Inhalts, Befehlen der Wiedergabe, in dem Stream, des gelesenen ersten Multimedia-Inhalts anstelle des oder zusätzlich zu dem ersten Abschnitt des Multimedia-Inhalts,
- zu dem zweiten Wiedergabezeitpunkt des zweiten Abschnitts des Multimedia-Inhalts, Befehlen der Wiedergabe, in dem Stream, des gelesenen zweiten Multimedia-Inhalts anstelle des oder zusätzlich zu dem zweiten Abschnitt des Multimedia-Inhalts.

13. Computerprogramm, das Anweisungen umfasst, die das Empfangsverfahren nach einem beliebigen der Ansprüche 1 bis 11 implementieren, wenn das Programm auf einem Computer ausgeführt wird.

14. Computerlesbares Aufzeichnungsmedium, auf dem ein Computerprogramm aufgezeichnet ist, das Anweisungen beinhaltet, die das Empfangsverfahren nach einem beliebigen der Ansprüche 1 bis 11 implementieren, wenn das Programm durch einen Computer ausgeführt wird.

## Claims

1. Method for receiving a flow (F1a; F1b) representative of an item of multimedia content (CM), implementing the following, in a device for receiving the flow:
- activating (S3) a first reading module for reading the item of multimedia content,
- rendering (S4) the read item of multimedia content, said method being **characterized in that** it implements the following:
- determining (S5, S9) in the flow, at a first time (t_{Pi}) and at a second time (t_{Pi+1}) that respectively precede first (t_{Di}) and second times (t_{Di+1}) of rendering of contiguous first and second portions (PMi, PMᵢ₊₁) of the item of multimedia content, that the rendering of said first and second portions is to be modified by rendering respective first (CMIᵤ) and second (CMIᵥ) items of multimedia content, said determination being implemented using a first item of access information for accessing the first item of multimedia content and a second item of access information for accessing the second item of multimedia content, said first and second items of access information being read from the flow in association with said first time (t_{Pi}) preceding the first and second rendering times or in association respectively with the first (t_{Pi}) and second (t_{Pi+1}) times preceding the first and second rendering times,
- activating (S6, S10):
- a second reading module for reading (S7) the first item of multimedia content, accessed using said first item of access information, at the first time of rendering of the first portion of the item of multimedia content, said second reading module being activated before said first rendering time,
- a third reading module for reading (S11) the second item of multimedia content, accessed using said second item of access information, at the second time of rendering of the second portion of the item of multimedia content, said third reading module being activated before the end time of the first portion of the item of multimedia content,
- at the first time of rendering of the first portion of the item of multimedia content, commanding (S8) the rendering, in said flow, of the read first item of multimedia content, instead of or in addition to the first portion of the item of multimedia content,
- at the second time of rendering of the second portion of the item of multimedia content, commanding (S12) the rendering, in said flow, of the read second item of multimedia content, instead of or in addition to the second portion of the item of multimedia content.

2. Reception method according to Claim 1, wherein modifying the rendering of a given portion of the item of multimedia content consists in substituting the rendering of the given portion with the rendering of one of the first and second items of multimedia content.

3. Reception method according to Claim 1, wherein modifying the rendering of a given portion of the item of multimedia content consists in simultaneously rendering the given portion and one of the first and second items of multimedia content.

4. Reception method according to Claim 1, wherein the activation of the second and of the third reading module is implemented following reading, in the flow, at a time (t_{Pi}) before the start of the first portion of the item of multimedia content, of an item of access information (IAᵤ) for accessing the first item of multimedia content (CMIᵤ), and, at a time (t_{Pi+1}) preceding the start of the second portion of the item of multimedia content, of an item of access information (IAᵥ) for accessing the second item of multimedia content (CMIᵥ).

5. Reception method according to Claim 1, wherein the activation of the second and of the third reading module is implemented following reading, in the flow, at a time (t_{Pi}) preceding the start of the first portion of the item of multimedia content, of an item of access information (IAᵤ) for accessing the first item of multimedia content and an item of access information (IAᵥ) for accessing the second item of multimedia content.

6. Reception method according to Claim 4 or Claim 5, wherein the item of access information is deduced from an item of information corresponding to the item of multimedia content (CM).

7. Reception method according to Claim 4 or Claim 5, wherein the item of access information is a multimedia content identifier.

8. Reception method according to Claim 4 or Claim 5, wherein the item of access information contains an instruction for determining whether the rendering of a given portion of the item of multimedia content, which has not yet been read, may or may not be modified by the rendering of an item of multimedia content.

9. Reception method according to Claim 4 or Claim 5, wherein the item of access information is an access address for accessing, via a communication network, the first and/or the second item of multimedia content.

10. Reception method according to Claim 4 or Claim 5, wherein the item of access information is an item of user profile information.

11. Reception method according to any one of Claims 1 to 10, wherein the first and/or the second matching item of multimedia content is accessible:
- from the reception device (REC), and/or
- from a content storage device (SC) connected to the reception device via a communication network, and/or
- in a subflow (SF1a, SF1b) associated with the received flow.

12. Reception device (REC) for receiving a flow representative of an item of multimedia content (CM), comprising:
- a first reading module (ML1) for reading the item of multimedia content (CM),
- a rendering module (RST) for rendering the read item of multimedia content,
said device being **characterized in that** it comprises a processing module (MT) that is designed to implement the following:
- determining in the flow, at a first time (t_{Pi}) and at a second time (t_{Pi+1}) that respectively precede first (t_{Di}) and second times (t_{Di+1}) of rendering of contiguous first and second portions of the item of multimedia content, that the rendering of said first and second portions is to be modified by rendering respective first (CMIᵤ) and second (CMIᵥ) items of multimedia content, said determination being implemented using a first item of access information for accessing the first item of multimedia content and a second item of access information for accessing the second item of multimedia content, said first and second items of access information being read from the flow in association with said first time (t_{Pi}) preceding the first and second rendering times or in association respectively with the first (t_{Pi}) and second (t_{Pi+1}) times preceding the first and second rendering times,
- activating:
- a second reading module (ML2) for reading the first item of multimedia content, accessed using said first item of access information, at the first time of rendering of the first portion of the item of multimedia content, said second reading module being activated before said first rendering time,
- a third reading module (ML3) for reading the second item of multimedia content, accessed using said second item of access information, at the second time of rendering of the second portion of the item of multimedia content, the third reading module being activated before the end time of the first portion of the item of multimedia content,
- at the first time of rendering of the first portion of the item of multimedia content, commanding the rendering, in said flow, of the read first item of multimedia content, instead of or in addition to the first portion of the item of multimedia content,
- at the second time of rendering of the second portion of the item of multimedia content, commanding the rendering, in said flow, of the read second item of multimedia content, instead of or in addition to the second portion of the item of multimedia content.

13. Computer program including instructions that implement the reception method according to any one of Claims 1 to 11 when said program is executed on a computer.

14. Computer-readable recording medium on which there is recorded a computer program comprising instructions that implement the reception method according to any one of Claims 1 to 11 when said program is executed by a computer.
